# EUROPEAN PATENT SPECIFICATION

(11) **EP 3 561 628 B1**
(45) Date of publication and mention of the grant of the patent: **17.11.2021**
(21) Application number: 18168820.1
(22) Date of filing: 23.04.2018
(51) Int. Cl.: G05D 1/02, G06Q 10/04

(54) **INDUSTRIAL VEHICLE, SYSTEM AND METHOD FOR OPTIMISATION OF MOVING PAYLOAD**
NUTZFAHRZEUG, SYSTEM UND VERFAHREN ZUR OPTIMIERUNG EINER BEWEGLICHEN NUTZLAST
VÉHICULE INDUSTRIEL, SYSTÈME ET PROCÉDÉ D'OPTIMISATION DE DÉPLACEMENT DE CHARGE UTILE

(43) Date of publication of application: 30.10.2019
(73) Proprietor: Toyota Material Handling Manufacturing Sweden AB, 595 81 Mjölby (SE)
(72) Inventor: TENGVERT, Peter, 591 52 Motala (SE); AHLBERG, Boris, 590 33 Fornåsa (SE)
(74) Representative: Zacco Sweden AB

(56) References cited:
- WO-A1-2016/124999
- CN-A- 104 809 606
- US-A1- 2016 124 434
- US-A1- 2016 132 059

## Description

### TECHNICAL FIELD

The invention relates to an industrial vehicle for optimisation of moving payload, a method for optimisation of moving payload, a computer program carrying out the method, a computer-readable medium carrying out the method, and a system for optimisation of moving payload comprising a plurality of the industrial vehicles.

### BACKGROUND ART

Various kinds of industrial vehicles are becoming increasingly autonomous. Industrial vehicles that can be both autonomous and manually controlled are referred to as semi-autonomous. A central control unit may be configured to control one or several industrial vehicles by sending a number of instructions to each of the at least one industrial vehicle, either prior to the task or continuously during the task, in order to move payload from a first position to a second position. This set up has the draw back that as the fleet of industrial vehicles increases and as the tasks get more complex, the computational power required to determine which industrial vehicle that is most suitable to fulfil each subtask grows at an exponential rate. Further, as the fleet of industrial vehicles increases and as the area or volume in which the industrial vehicles operate, higher bandwidth and stronger communication signals are required in order to accomplish satisfying communication between the central control unit and the industrial vehicles.

US 2016/0124434 discloses a system for controlling a fleet of unmanned vehicles. The system includes a plurality of unmanned vehicles connected to a computing device.

Thus, there is a need for decreasing the complexity, the bandwidth requirements and the signal handling in a system for controlling industrial vehicles in order to move payload from a first position to a second position.

### SUMMARY OF THE INVENTION

The invention is defined by independent claims 1 and 11.

The disclosure relates to an industrial vehicle for optimisation of moving payload from a first position to a second position. The industrial vehicle comprises: control unit for controlling the industrial vehicle, carrying means for carrying a payload, transporting means for transporting the industrial vehicle and antenna for receiving and sending information. The control unit is connected to the carrying means, the transporting means and the antenna. The control unit is configured to obtain vehicle information of a plurality of industrial vehicles, said vehicle information comprising position data. Further, the control unit is configured to obtain payload information of a payload, said payload information comprising position data of the payload. Yet further, the control unit is configured to obtain optimisation criteria comprising at least the time required to move the payload from the first position to the second position. The control unit is also configured to determine, based on the obtained vehicle information, the obtained payload information and the obtained optimisation criteria, at least one selected industrial vehicle, of the plurality of industrial vehicles, to move the payload. Further, the control unit is configured to provide, to the at least one selected industrial vehicle, an instruction to move the payload. An advantage of that the industrial vehicle can receive and send information to other industrial vehicles and determine and send instructions to other industrial vehicles is that the need of a central unit is avoided. The control unit is able to determine which industrial vehicle or combination of industrial vehicles that is most suitable to move payload from a first position to a second position based on the optimisation criteria, the position data of the industrial vehicles and the payload.

In one example, said carrying means is: a first carrying type, comprising lifting means attached to the vehicle, said lifting means is configured to lift the payload; or a second carrying type, without lifting means, capable of receiving the payload from a vehicle comprising carrying means of the first carrying type. Said vehicle information comprises information of type of carrying means of the at least one industrial vehicle. An advantage is that the control unit further is able to determine which industrial vehicle or combination of industrial vehicles that is most suitable to move the payload from a first position to a second position based on carrying type.

In another example, said control unit is configured to instruct a combination of industrial vehicles of the first carrying type to move the payload from the first position to the second position. An advantage is that the control unit further is able to divide the task to move the payload from a first position to a second position between industrial vehicles of the two different carrying types depending on which carrying type that is more suitable to perform each part of moving the payload from the first position to the second position.

In a further example, said control unit is configured to instruct a combination of industrial vehicles to move the payload from the first position to the second position, wherein an industrial vehicle of the first carrying type is configured to place, by means of the lifting means, the payload on the carrying means of an industrial vehicle of the second carrying type, and/or remove, by means of the lifting means, the payload from the carrying means of an industrial vehicle of the second carrying type and place the payload on the second position. An advantage is that industrial vehicles of first carrying type may be used primarily for placing the payload on the carrying means of an industrial vehicle of the second carrying type and removing the payload from the carrying means of an industrial vehicle of the second carrying type and to place the payload on the second position, whereas industrial vehicles of second carrying type are used primarily for transporting the payload from the first position to the second position. Thus, further optimisation of moving the payload from the first position to the second position is obtained. For example, the control unit may instruct an industrial vehicle of first carrying type and an industrial vehicle of second carrying type to move closely to the first position. Further, the control unit may instruct the industrial vehicle of first carrying type to lift up the payload and place the payload on the carrying means of the industrial vehicle of second carrying type. Yet further, the control unit may instruct the industrial vehicle of second carrying type to move closely to the second position. Finally, the control unit may instruct another industrial vehicle of first carrying type to move closely to the second position, lift up the payload and place the payload on the second position.

In a yet further example, said lifting means comprises at least one fork. An advantage of that the lifting means comprises at least one fork is that a fork is a suitable lifting means for placing the payload on the carrying means of an industrial vehicle of the second carrying type, and/or remove the payload from the carrying means of an industrial vehicle of the second carrying type, and/or place the payload on the second position.

In another example, said lifting means comprises an arm attached to the vehicle, said arm comprising an end effector. An advantage, of that said lifting means comprises an arm attached to the vehicle, said arm comprising an end effector, is that it provides a suitable lifting means for placing the payload on the carrying means of an industrial vehicle of the second carrying type, and/or remove the payload from the carrying means of an industrial vehicle of the second carrying type, and/or place the payload on the second position.

In a further example, said control unit further is configured to send its vehicle information to other industrial vehicles. An advantage, of that said control unit further is configured to send its vehicle information to other industrial vehicles, is that the other industrial vehicles will obtain further information to determine at least one instruction for moving payload from a first position to a second position.

In a yet further example, said control unit further is configured to send said vehicle information of other industrial vehicles and/or said payload information to other industrial vehicles. An advantage, of that said control unit further is configured to send said vehicle information of remote industrial vehicles and/or said payload information to other industrial vehicles, is that the other industrial vehicles will obtain further information to determine at least one instruction for moving payload from a first position to a second position.

In another example, said control unit further is configured to receive an instruction to move the payload and perform the instruction to move the payload. An advantage is that the industrial vehicle can perform the instruction to move the payload.

In a further example, said vehicle information comprises information of which payload dimensions the lifting means is allowed to carry and said payload information comprises information of dimensions of the payload. An advantage is that the control unit is able to determine which industrial vehicle that is more suitable to carry the payload, in dependence of, among other parameters, the dimensions of the payload.

In a yet further example, said vehicle information comprises information of which payload weight the lifting means is allowed to carry and said payload information comprises information of weight of the payload. An advantage is that the control unit is able to determine which industrial vehicle that is more suitable to carry the payload, in dependence of, among other parameters, the weight of the payload.

In another example, said vehicle information comprises information of maximum lift height of the lifting means and said payload information comprises height information of the payload. An advantage is that the control unit is able to determine which industrial vehicle that is more suitable to carry the payload, in dependence of, among other parameters, the maximum lift height of each of the industrial vehicles of the first carrying type and the height information of the payload.

In a further example, said vehicle information comprises at least one of the following predetermined features of the industrial vehicle: maximum allowed payload at the carrying means, centre of mass of the vehicle, maximum velocity of the lifting means, maximum battery capacity of the vehicle, and possible activities for the vehicle. An advantage is that the control unit further is able to determine which industrial vehicle that is more suitable to carry the payload, in dependence of, among other parameters, at least one of the listed parameters above describing predetermined features of the industrial vehicle.

In a yet further example, said vehicle information comprises status information including at least one of the following parameters describing the current status of the industrial vehicle: current position of the industrial vehicle, current velocity of the industrial vehicle, current payload at the carrying means, current centre of mass of the vehicle, current battery capacity of the vehicle, current activity of the vehicle and next planned activity of the vehicle. An advantage is that the control unit further is able to determine which industrial vehicle that is more suitable to carry the payload, in dependence of, among other parameters, at least one of the listed parameters above describing the current status of the industrial vehicle.

In another example, said vehicle information comprises status information including current lift height of the lifting means and/or current velocity of the lifting means. An advantage is that the control unit further is able to determine which industrial vehicle that is more suitable to carry the payload, in dependence of, among other parameters, at least one of the listed parameters above describing the current status of the first carrying type of the industrial vehicle.

In a further example, said optimisation criteria further comprises at least one of the following criteria:
^{∗} security and safety, comprising at least one of: avoiding collision with other industrial vehicles, payloads and other obstacles; avoiding unintentional dropping of the payload; stability of the industrial vehicle regarding actual wheel pressure of the industrial vehicle; and area restriction obedience considering ports and ceilings;
^{∗} energy efficiency, comprising task optimisation by performing a given task with a minimum of energy consumption;
^{∗} productivity efficiency, comprising at least one of: task optimisation by performing a given task with a minimum of safety margin; and radio connectivity optimisation by controlling that each of the industrial vehicles have radio connection with as many other industrial vehicles as possible;
*utilisation efficiency, comprising at least one of: taking into account if an industrial vehicle has reduced capability; taking into account if intensity driven heat balancing is needed; taking into account if emergency transportation is needed; and taking service time balancing into account.

An advantage is that the control unit further is able to determine which industrial vehicle that is more suitable to carry the payload, in dependence of, among other parameters, at least one of the listed parameters above describing further optimisation criteria.

Further, the disclosure relates to a method for optimisation of moving payload from a first position to a second position. The method is carried out by a control unit of an industrial vehicle. The method comprises the steps of:
obtaining vehicle information of a plurality of industrial vehicles, said vehicle information comprising position data;
obtaining payload information of a payload, said payload information comprising position data of the payload;
obtaining optimisation criteria comprising at least the time required to move the payload from the first position to the second position;
determining, based on the obtained vehicle information, the obtained payload information and the obtained optimisation criteria, at least one selected industrial vehicle, of the plurality of industrial vehicles, to move the payload;
providing, to the at least one selected industrial vehicle, an instruction to move the payload.

Additionally, the disclosure relates to a computer program comprising instructions which, when the program is executed by the control unit, cause the control unit to carry out the method. Further, the disclosure relates to a computer-readable medium comprising instructions which, when executed by the control unit, cause the control unit to carry out the method.

Yet further, the disclosure relates to a system for optimisation of moving payload. The system comprises a plurality of industrial vehicles according to the industrial vehicle described above. The system is configured to allow any of the plurality of industrial vehicles to send the instruction to any of the plurality of industrial vehicles.

In one example, the system is configured to set up a priority scheme between the plurality of industrial vehicles based on said vehicle information of each of the plurality of industrial vehicles. An advantage is that the system will be able to handle if two or more industrial vehicles send conflicting instructions to a selected industrial vehicle.

In a further example, the system is further configured to set up the priority scheme between the plurality of industrial vehicles based on the number of information items of the control unit, so that when two or more industrial vehicles send conflicting instructions to a selected industrial vehicle, the instruction from the industrial vehicle having a higher number of information items in the vehicle information and/or the payload information is prioritized.. An advantage is that the system will be able to handle if two or more industrial vehicles send conflicting instructions to a selected industrial vehicle and to prioritise the instruction from the industrial vehicle having a higher number of information items in the vehicle information and/or the payload information.

In a yet further example, the system is further configured to set up the priority scheme between the plurality of industrial vehicles based on calculation capabilities of the control unit of each of the industrial vehicles. An advantage is that the system will be able to handle if two or more industrial vehicles send conflicting instructions to a selected industrial vehicle and to prioritise the instruction from the industrial vehicle having better calculation capabilities.

### BRIEF DESCRIPTION OF THE DRAWINGS

The disclosure will be further described with reference to the accompanying drawings:
FIG. 1 shows the functional features of the industrial vehicle(s) according to the disclosure.
FIG. 2 illustrates an area space comprising an industrial vehicle a payload which should be moved from a first position to a second position.
FIG. 3 illustrates an area space comprising a payload and two industrial vehicles, wherein the payload should be moved from the first position to the second position.
FIG. 4 shows an example of an industrial vehicle of first carrying type, represented by a fork lift.
FIG. 5A illustrates a detailed example of an industrial vehicle of first carrying type, represented by a fork lift.
FIG. 5B shows another example of an industrial vehicle of first carrying type, represented by a fork lift having improved lift functionality.
FIGS. 6A-6D illustrate examples of an industrial vehicle of first carrying type comprising an arm attached to the vehicle, said arm comprising an end effector.
FIGS. 7A-7D show different aspects of an industrial vehicle of second carrying type, represented by a transporter.
FIG. 8 shows an example of an area space comprising the payload and three industrial vehicles, two of which are of the first carrying type and one of which is of the second carrying type.
FIG. 9 illustrates an example of an area space comprising a plurality of payloads and a plurality of industrial vehicles.
FIG. 10 illustrates a flowchart of a method carried out by a control unit of an industrial vehicle.
FIG. 11 shows a table of different optimisation criteria.

### DETAILED DESCRIPTION

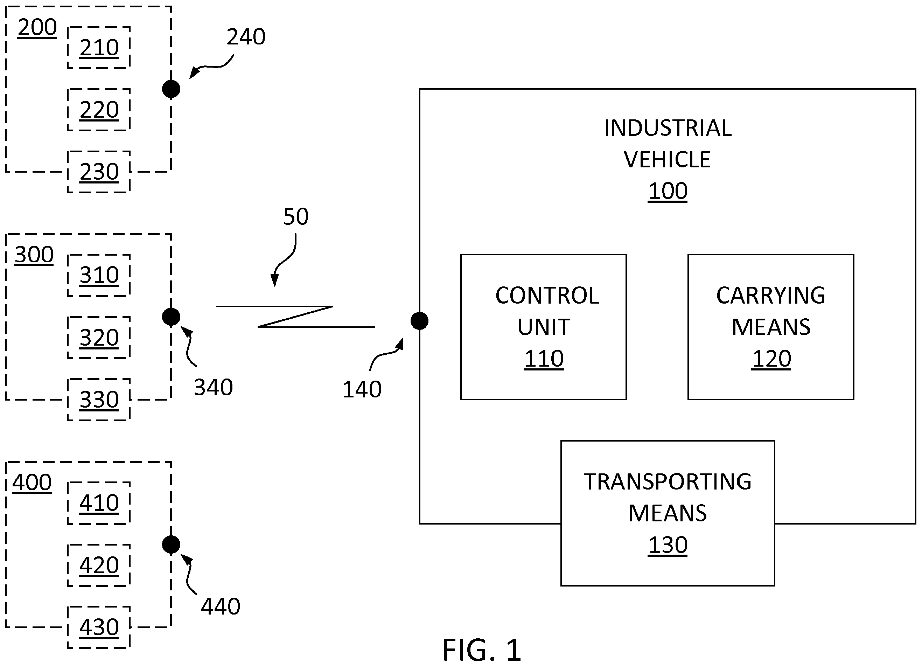

FIG. 1 shows the functional features of the industrial vehicle(s) according to the disclosure. The industrial vehicle 100 comprises a control unit 110 for controlling the industrial vehicle, a carrying means 120 for carrying a payload, a transporting means 130 for transporting the industrial vehicle, and an antenna 140 for receiving and sending information. The control unit 110 is connected to the carrying means 120, the transporting means 130 and the antenna 140. The industrial vehicle 100 is configured to communicate with other industrial vehicles 200, 300, 400 through the antenna 140 by wireless communication 50. The wireless communication 50 may be carried out by any suitable communication standard, communication system and/or communication protocol. The wireless communication 50 may for example be carried out by Bluetooth, Wi-Fi, 5th generation wireless systems, or any other suitable radio communication standard, communication system and/or communication protocol. Further, the wireless communication 50 may be carried out in accordance with the IEEE 802.11 standards. Thus, the control unit 110 and the antenna 140 of the industrial vehicle 100 may be configured to communicate by Bluetooth, Wi-Fi, 5th generation wireless systems, or any other suitable radio communication standard, communication system and/or communication protocol.

Each of the other industrial vehicles 200, 300, 400 may be arranged to comprise a control unit 210, 310, 410 for controlling the industrial vehicle, a carrying means 220, 320, 420 for carrying a payload 10, a transporting means 230, 330, 430 for transporting the industrial vehicle, and an antenna 240, 340, 440 for receiving and sending information. The control unit 210, 310, 410 is connected to the carrying means 220, 320, 420, the transporting means 230, 330, 430 and the antenna 240, 340, 440. Each of the industrial vehicles 200, 300, 400 may be configured to communicate with other industrial vehicles 100, 200, 300, 400 through wireless communication 50. The control unit 110, 210, 310, 410 and the antenna 140, 240, 340, 440 of each of the industrial vehicles 100, 200, 300, 400 may be configured to communicate by Bluetooth, Wi-Fi, 5th generation wireless systems, or any other suitable radio communication standard, communication system and/or communication protocol.

Each of the transporting means 130, 230, 330, 430 may be any system for vehicular propulsion. In one example, the transporting means 130, 230, 330, 430 comprises a source of energy, such as a motor, wheels, suitable for ground and/or for rails, and axles. Instead of wheels continuous tracks may be used. In another example, the transporting means 130, 230, 330, 430 comprises means for cable transport or similar.

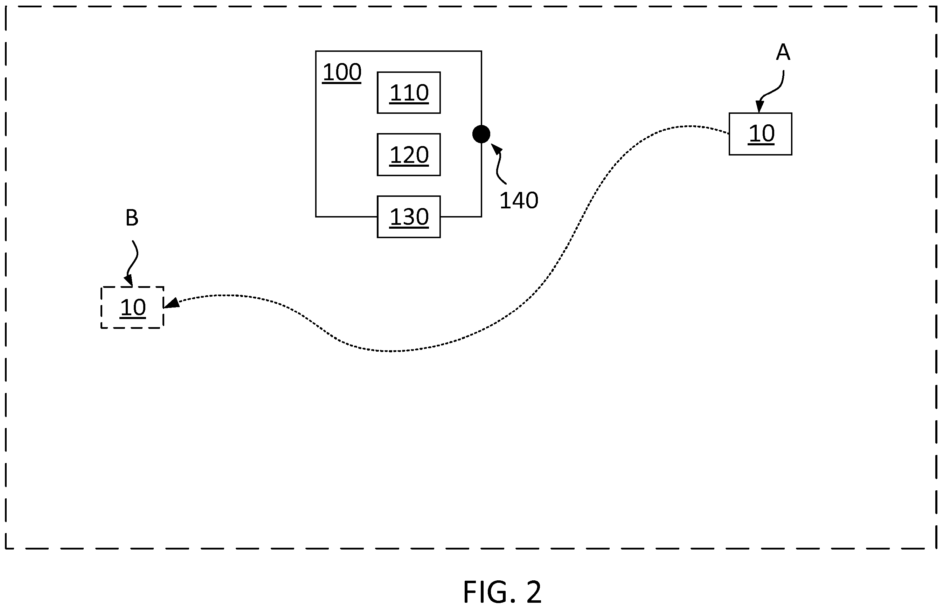

FIG. 2 illustrates an area space comprising an industrial vehicle 100 and a payload 10 which should be moved from a first position A to a second position B. The industrial vehicle 100 is suitable for optimisation of moving the payload 10 from the first position A to the second position B. The control unit 110 of the industrial vehicle 100 is configured to obtain vehicle information of at least one industrial vehicle 100, 200, 300, 400. The vehicle information comprises position data of at least one industrial vehicle 100, 200, 300, 400. The control unit 110 of the industrial vehicle 100 is further configured to obtain payload information of the payload 10. The payload information comprises position data of the payload 10. The control unit 110 of the industrial vehicle 100 is further configured to obtain optimisation criteria. The optimisation criteria comprises at least time required until the payload 10 has been moved from the first position A to the second position B. The control unit 110 of the industrial vehicle 100 is further configured to determine, based on the obtained vehicle information, the obtained payload information and the obtained optimisation criteria, at least one selected industrial vehicle, of the at least one industrial vehicle 100, 200, 300, 400, to move the payload 10. The control unit 110 of the industrial vehicle 100 is further configured to provide, to the at least one selected industrial vehicle 100, 200, 300, 400, an instruction to move the payload 10.

In one example, the vehicle information comprises current position data of the industrial vehicle 100, 200, 300, 400. In a further example, the vehicle information further comprises future position data of the industrial vehicle 100, 200, 300, 400. The future position data of the industrial vehicle 100, 200, 300, 400 may relate to scheduled instructions of the industrial vehicle 100, 200, 300, 400.

In one example, the payload information comprises the first position A and the second position B of the payload 10. In another example, the payload information only comprises the first position A of the payload 10, whereas the second position B is retrieved separately from the control unit 110 or from any of the other industrial vehicles 200, 300, 400 through wireless communication 50. In a further example, the payload information only comprises current position of the payload 10, whereas the second position A and the second position B are retrieved separately from the control unit 110 or from any of the other industrial vehicles 200, 300, 400 through wireless communication 50.

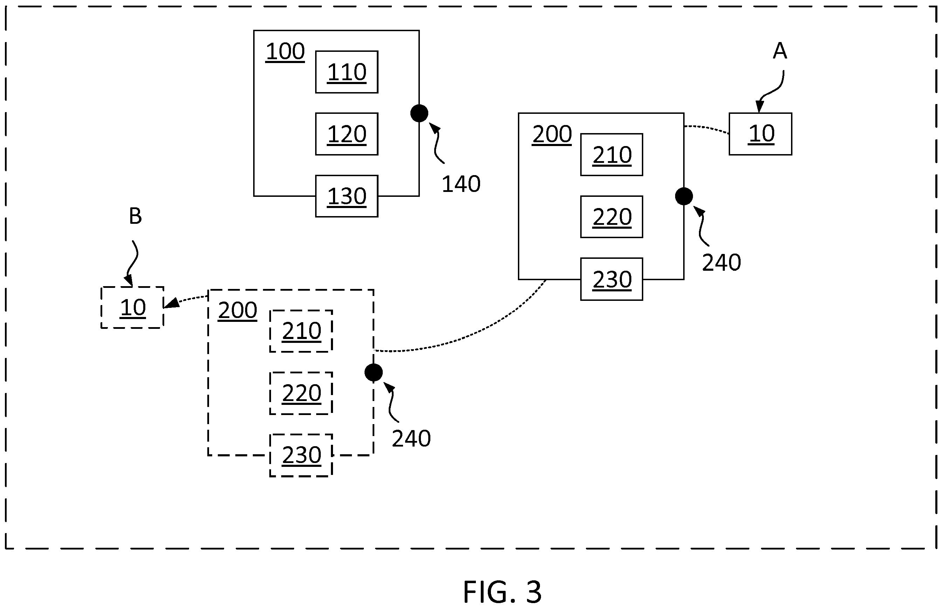

FIG. 3 illustrates an area space comprising a payload 10 and two industrial vehicles 100, 200, wherein the payload 10 should be moved from the first position A to the second position B. In this example, the second industrial vehicle 200 is of a first carrying type, which means that the second industrial vehicle 200 comprises lifting means 221 attached to the second industrial vehicle 200, said lifting means 221 is configured to lift the payload 10. The vehicle information comprises information of type of carrying means 220 of the second industrial vehicle 200. The second industrial vehicle 200 sends its vehicle information to the first industrial vehicle 100 through wireless communication 50. Further, the industrial vehicle 100 has obtained payload information of the payload 10. In this case, the vehicle information of the second industrial vehicle 200 comprises at least information of type of carrying means 220, i.e. first carrying type, and position data of the industrial vehicle 200. The control unit 110 of the first industrial vehicle 100 now has access to the vehicle information of the first industrial vehicle 100 and the second industrial vehicle 200. In this case, both the first industrial vehicle 100 and the second industrial vehicle 200 are of the first carrying type. Thus, both the first industrial vehicle 100 and the second industrial vehicle 200 are able to lift the payload 10 from the first position A, by means of the carrying means 120, 220 of the first carrying type, move close to the second position B, by means of the transporting means 130, 230 of the industrial vehicle 100, 200, and place the payload 10 on the second position B, by means of the carrying means 120, 220 of the first carrying type. However, from the position data of the first industrial vehicle 100, the second industrial vehicle 200 and the payload 10, the control unit 110 of the first industrial vehicle 100 is able to determine that the distance between the second industrial vehicle 200 and the first position A is shorter than the distance between the first industrial vehicle 100 and the first position A. Thus, the control unit 110 of the first industrial vehicle 100 determines, based on the obtained vehicle information, the obtained payload information and the obtained optimisation criteria, that the second industrial vehicle 200 is more suitable for moving the payload 10. Hence, the control unit 110 of the first industrial vehicle 100 provides, to the second industrial vehicle 200, an instruction to move the payload 10 from the first position A to the second position B. The instruction may comprise: move close to the first position A, lift the payload 10 from the first position A, by means of the carrying means 220, move close to the second position B, and place the payload 10 on the second position B, by means of the carrying means 220.

Further, the first industrial vehicle 100 may send its vehicle information to the second industrial vehicle 200. In this case, the control unit 210 of second industrial vehicle 200 may determine which of the industrial vehicles 100, 200 that is more suitable for moving the payload 10 and provide an instruction to that industrial vehicle 100, 200 to move the payload 10 from the first position A to the second position B.

Alternatively, the control unit 100 is configured to instruct a combination of industrial vehicles of the first carrying type 100, 200, 400 to move the payload 10 from the first position A to the second position B.

In a further example, the vehicle information comprises information of which payload dimensions the lifting means 121, 221, 421 of the industrial vehicle 100, 200, 400 is allowed to carry. Further, the payload information comprises information of dimensions of the payload 10. In this case, the control unit 110, 210, 410 is able to determine which industrial vehicle 110, 210, 410 that is more suitable to carry the payload 10, based on the dimensions of the payload 10.

In a yet further example, the vehicle information comprises information of which payload weight the lifting means 121, 221, 421 of the industrial vehicle 100, 200, 400 is allowed to carry. Further, the payload information comprises information of weight of the payload 10. In this case, the control unit 110, 210, 410 is able to determine which industrial vehicle 110, 210, 410 that is more suitable to carry the payload 10, based on the weight of the payload 10.

In another example, the vehicle information comprises information of maximum lift height of the lifting means 121, 221, 421 of the industrial vehicle 100, 200, 400. Further, the payload information comprises height information of the payload 10. The term height information refers to the height difference between the first position A/the second position B of the payload 10 and the ground level on which the industrial vehicles 100, 200, 300, 400 are present. In this case, the control unit 110, 210, 410 is able to determine which industrial vehicle 100, 200, 400 that is more suitable to carry the payload 10, based on the height information of the payload 10.

In a further example, the vehicle information comprises at least one of the following predetermined features of the industrial vehicle 100, 200, 300, 400:
maximum allowed payload at the carrying means 120, 220, 320, 420, centre of mass of the vehicle 100, 200, 300, 400, maximum velocity of the lifting means 121, 221, 421, maximum battery capacity of the vehicle 100, 200, 300, 400, and possible activities for the vehicle 100, 200, 300, 400.

In a further example, the vehicle information comprises status information including at least one of the following parameters describing the current status of the industrial vehicle 100, 200, 300, 400:
current position of the industrial vehicle 100, 200, 300, 400, current velocity of the industrial vehicle 100, 200, 300, 400, current payload at the carrying means 120, 220, 320, 420, current centre of mass of the vehicle 100, 200, 300, 400, current battery capacity of the vehicle 100, 200, 300, 400, current activity of the vehicle 100, 200, 300, 400 and next planned activity of the vehicle 100, 200, 300, 400.

In another example, the vehicle information comprises status information including current lift height of the lifting means 121, 221, 421 and/or current velocity of the lifting means 121, 221, 421 of the industrial vehicle 100, 200, 400.

According to an aspect of the disclosure each of the industrial vehicles 100, 200, 300, 400 comprises a power source and a drive motor. The power source may be a battery, such as a lead battery, a lithium ion battery, a lithium polymer battery, or any other suitable power source. The motor may be an electric motor. A particularly good electric motor is a brushless motor. In general any motor is applicable. The drive wheel can have any position on the industrial vehicles 100, 200, 300, 400. Further, the transporting means 130, 230, 330, 430 of the industrial vehicles 100, 200, 300, 400 may comprise wheels, wherein at least one wheel is a drive wheel connected to the control unit 110, 210, 310, 410. Any of the industrial vehicles 100, 200, 300, 400 may comprise at least one sensor 118, 218, 318, 418. The sensors 118, 218, 318, 418 provide for that the industrial vehicle 100, 200, 300, 400 can operate in very narrow environment of a warehouse. The sensors 118, 218, 318, 418 can be of a suitable type such as laser, ultra-sound or radio based sensors.

Any of the industrial vehicle 100, 200, 300, 400 may comprise navigating equipment for navigating in a warehouse. The navigating equipment may be comprised in or connected to the control unit 110, 210, 310, 410 of the industrial vehicle 100, 200, 300, 400. The control unit 110, 210, 310, 410 together with the sensors 118, 218, 318, 418 and the navigation equipment provides for an industrial vehicle 100, 200, 300, 400 that can perform tasks in the warehouse without interaction of an operator.

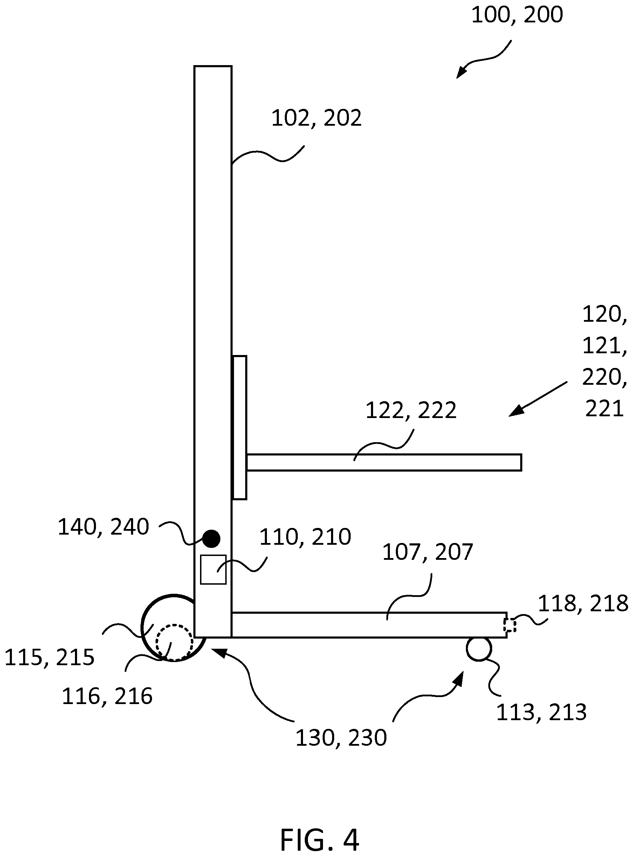

FIG. 4 shows an example of an industrial vehicle 100, 200, 400 of first carrying type, represented by a forklift. For clarity purposes the industrial vehicle 100, 200, 400 will be referred to as the industrial vehicle 100, 200 represented by a forklift. The industrial vehicle 100, 200 comprises at least one support leg 107, 207, wherein each support leg 107, 207 is connected to a first wheel 115, 215 and a second wheel 113, 213. The at least one support leg 107, 207 is arranged substantially parallel to the ground. Further, industrial vehicle 100, 200 comprises a mast 102, 202 connected to the at least one support leg 107, 207 in the vicinity of the first wheel 115, 215. The mast 102, 202 is arranged substantially perpendicular to the at least one support leg 107, 207, such that the mast 102, 202 and the at least one support leg 107, 207 together form an L. The industrial vehicle 100, 200 comprises a control unit 110, 210, transporting means 130, 230 comprising a plurality of wheels 130, 230 and an antenna 140, 240. Yet further, the industrial vehicle 100, 200 comprises carrying means 120, 220. The carrying means 120, 220 is in this case also part of the lifting means 121, 221 configured to lift the payload 10. The lifting means 121, 221 comprises at least one fork 122, 222. The at least one fork 122, 222 is movably attached to the mast 102, 202, such that the fork 122, 222 can be lifted or lowered by the 224 in directions vertically to the ground. Each of the forks 122, 222 may have an outer end element 223A, 223B and an inner element. The outer element is extendable, for reach purposes. This is made possible as preferred by a hydraulic arrangement with hydraulic cylinders. This could also be achieved with an electric adjustment device. By this arrangement the fork(s) 122, 222 can be pushed out and pulled back in directions perpendicular to the mast 102, 202, i.e. horizontally to the at least one support leg 107, 207. The first wheel 115, 215 may be the drive wheel. An additional wheel 116, 216 may be arranged in the vicinity of the connection point between one the at least one support legs 107, 207 and the mast 102, 202. The additional wheel 116, 216 is arranged as a stabilising support wheel. The additional wheel 116, 216 is preferably a swivelling wheel. The mast 102, 202 may comprise two parallel beams, wherein each of the beams, at its lower end, is connected to one of the support leg 107, 207. Each of the at least one second wheel 113, 213 may be a boogie of wheels or rolls.

The at least one support leg 107 differentiates the industrial vehicle 100, 200 from a counter balance truck as the centre of gravity of a payload 10 is always positioned in vertical direction within the area defined by the at least one support leg 107, 207 and the mast 102, 202. Thus, the industrial vehicle 100, 200 in general cannot tip forward. The at least one support leg 107, 207 may have an L shape as disclosed in FIG. 4. The L shape is used when fixedly attaching the mast 102, 202 to the at least one support leg 107, 207.

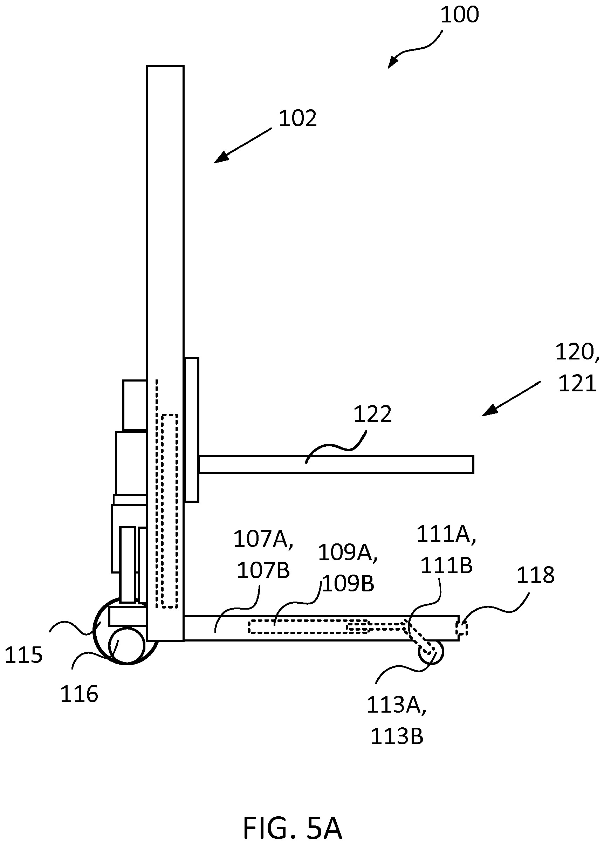

FIG. 5A illustrates a detailed example of the industrial vehicle 100 of first carrying type, represented by a fork lift, including all features described in relation to FIG. 4. However, in this example, the industrial vehicle 100 comprises two support legs 107A, 107B. The mast 102 is preferred to be positioned on the respective support leg 107A, 107B. Preferably, each the support legs 107A, 107B comprises a respective horizontal support leg hydraulic cylinder 109A, 109B. Each of the cylinders 109A, 109B acts on a respective lever 111A, 111B that is connected with one of the two second wheels 113A, 113B. By pressing on at least one of the levers 111, the forward ends of the at least one support leg 107 can be raised.

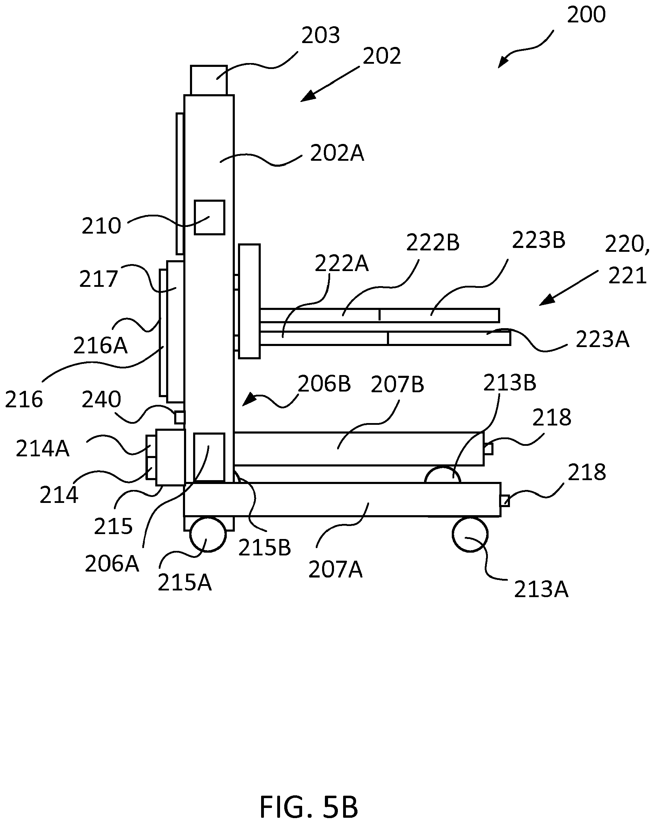

FIG. 5B shows another example of an industrial vehicle 200 of first carrying type, represented by a fork lift having improved lift functionality. In order to increase the readability, the industrial vehicle of first carrying type, represented by a fork lift having improved lift functionality, is referred to as industrial vehicle 200. However, any of the earlier mentioned first, second, third and fourth industrial vehicle 100, 200, 300, 400 may comprise parts of the herein described functionality. FIG. 5B is related to a high lifting industrial vehicle. With high lifting is to be understood an industrial vehicle that in general can lift higher than a stacker industrial vehicle. A stacker in general can position a first payload 10 onto a second payload 20. The high lifting industrial vehicle can lift much higher than this and position and fetch a payload 10, 20 that is positioned in a rack that can be as high as ten meters or more. In general this requires a mast 202 that has several sections that can telescopically extend the mast 202 with a load carrier for lifting high. In general the industrial vehicle 200 has a load carrier in form of carrying means 220. The carrying means 220 is in generally a pair of forks 222 that is optimal for lifting a payload 10 that is positioned on a pallet. The industrial vehicle 200 in general comprises an energy source that can power a drive motor. The energy source may be a battery, and the drive motor an electric motor. Other energy sources are thinkable but not so common in a warehouse environment, such energy sources could be gas or fuel cells. The industrial vehicle 200 is in general not a counter balance vehicle. The industrial vehicle 200 is in general a reach industrial vehicle. This means that it can extend the load carrier/carrying means in the longitudinal direction of the vehicle that is in the direction of the load carrier/carrying means. Further the industrial vehicle 200 has support legs 207A, 207B that will bear the weight of a payload 10 such that the centre of gravity of the payload 10 itself is mainly positioned in the inner area of the wheels that bears the industrial vehicle 200.

FIG. 5B discloses a high lifting industrial vehicle 200. The vehicle 200 comprises a mast 202. The mast 202 has a first vertical beam 202A. The mast 202 has also a telescopic element 203.

The industrial vehicle 200 further comprises auxiliary equipment. The auxiliary equipment is defined as equipment that is attached to the mast 202, in order for the mast 202 to be able to move and perform an instruction. The auxiliary equipment comprises a first support leg 207A and a second support leg 207B, as seen in FIG. 5B. The support legs 207A, 207B have as function to carry payload 10. This is as opposed to a counter balance truck where the weight of a payload 10 is balanced by a counter balance weight. The support legs 207A, 207B have a respective second wheel 213A, 213B. The wheels 213A, 213B are shown as a single wheel on respective support leg 207A, 207B, but can be any type of wheel pair as a boogie or the like. All wheels of the industrial vehicle 200 can be installed to the support legs 207A, 207B. It is important that the support legs 207A, 207B are not movable in relation to each other and in particular in relation to the mast 202. The support legs 207A, 207B are fixedly attached to the mast 202 at any moment. This provides for a very stable industrial vehicle 200 that also can be easily controlled without any differing angles to the wheels 230 installed onto the support legs 207A, 207B. Also the industrial vehicle 200 will be very sturdy and will lover maintenance needs.

The industrial vehicle 200 has at least two of its wheels steerable. This is preferred to be the first wheels 215A, 215B, i.e. the drive wheels that are steerable by means of a respective servo motor. Individual steering of the drive wheels 215A, 215B is preferred. This provides for a better control and adaptation to any movement of the industrial vehicle 200.

The second wheels, i.e. the forward wheels, 213A, 213B of the support legs 207A, 207B can be swivel wheels if and only the drive wheels 215A, 215B are steerable. However one or both of the forward wheels 213A, 213B may also be a steerable wheel. The steering is made possible by a respective servo motor. The steering is preferred to be individual for each wheel to allow very precise steering and avoid wear on the wheels in curves etc.

The industrial vehicle 200 comprises at least two drive motors 206A, 206B. The drive motors 206A, 206B may be situated on the support legs 207A, 207B and by means of these fixed to the mast 202 on each respective side of the mast 202, as seen in FIG. 5B.

The industrial vehicle 200 further has a carrying means 220 that is movably attached to the mast 202. The carrying means 220 comprises forks 222A, 222B. As disclosed in FIG. 5B the forks 222A, 222B have an outer end element 223A, 223B and an inner element. The outer element 223A, 223B is extendable, for reach purposes. This is made possible as preferred by a hydraulic arrangement with hydraulic cylinders. This could also be achieved with an electric adjustment device.

The industrial vehicle 200 further has a hydraulic system comprising a motor 214 connected to a hydraulic pump 214A. The hydraulic system powers the lifting and lowering functions of the industrial vehicle 200. Hydraulics may also power the extension of forks 222A, 222B if desired. A hydraulic cylinder is pressurized from the pump 214A for lifting purposes. The hydraulic pump 214A is fixedly attached to the mast 202, preferably by means of a holder 215. The motor 214 and the hydraulic pump 214A are preferred to be dimensioned such that lifting speeds without load can be reached in the excess of 3 m/s in vertical direction. It should be understood that there can be several lifting cylinders for performing lifting tasks. There can be one cylinder for lifting the carrying means 220 up to the top of the first mast element 202A, and a second hydraulic cylinder for lifting a further mast element 203.

The industrial vehicle 200 has an energy source device 216. The energy source device 216 comprises a battery pack 216A and a holder 217. The holder is fixedly attached to the mast 202. The battery pack is preferred to be constituted of Li-Ion battery cells.

The electric system of the industrial vehicle 200 is preferred to be using above 300 Volt. This will be an advantage as the current values can be kept lower and cabling will be simplified. This is in contrast to prior art where much lower Volt values are in general used, for example 24, 36 or 48 Volts.

The industrial vehicle 200 comprises a control unit 210. The control unit 210 has processor, memory and software to control the functions and operation of the industrial vehicle 200. As described earlier, the industrial vehicle 200 comprises an antenna 240 for enabling sending and receiving of information and instructions.

All wheels 215A, 215B, 213A, 213B may be steerable. This provides for a very excellent manoeuvrability and also provides for using narrow aisles in a warehouse. Thus the multi wheel steering improves efficiency of the warehouse payload handling as a whole. In particular the industrial vehicle 200 can move in diagonal direction and turn very narrowly of more wheels are steerable than one.

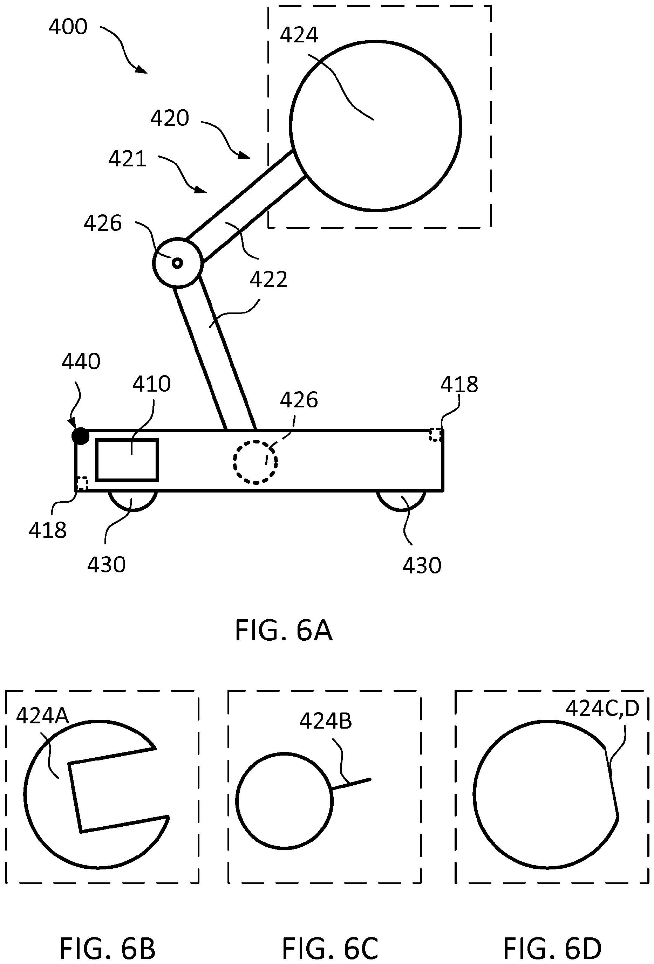

FIGS. 6A-6D illustrate examples of an industrial vehicle 100, 200, 400 of first carrying type comprising an arm attached to the industrial vehicle, said arm comprising an end effector. For clarity purposes the industrial vehicle 100, 200, 400 will be referred to as the fourth industrial vehicle 400. The industrial vehicle 400 comprises a control unit 410, transporting means 430, such as wheels, and at least one an antenna 440. Further, the industrial vehicle 400 comprises lifting means 421, in the form of an arm 422 attached to the vehicle 400, and carrying means 420 in the form of an end effector 424 attached to the arm 422, such that the arm 422 is configured control the position of the end effector 424. The arm 422 may have at least one joint 426 to increase the mobility and the lifting possibilities of the arm 422.

The end effector 424 may be any gripper or tool suitable for picking up the payload 10, carrying the payload 10 and placing the payload 10 on the second position B or on the carrying means 320 of third industrial vehicle 300. According to an aspect, shown in FIG. 6B, the end effector 424 is of impactive type 424A. The end effector 424 of impactive type 424A comprises jaws or claws which physically grasp by direct impact upon the payload 10. According to another aspect, shown in FIG. 6C, the end effector 424 is of ingressive type 424B. The end effector 424 of ingressive type 424B comprises pins, needles or hackles which physically penetrate the surface of the payload 10. According to a further aspect, shown in FIG. 6D, the end effector 424 is of astrictive type 424C or of contigutive type 424D. The end effector 424 of astrictive type 424C is configured to apply suction forces to the surface of the payload 10 by vacuum, magnet adhesion or electro adhesion. The end effector 424 of contigutive type 424D is configured to apply direct contact with the payload 10 for adhesion to take place, such as glue, surface tension or freezing.

In one aspect, the control unit 410 of the industrial vehicle 400 is configured to obtain vehicle information from the industrial vehicles 100, 200, 300, 400, obtain payload information from the payload 10, and obtain the criteria. In this case, the control unit 410 of the industrial vehicle 400 is configured to determine which of the industrial vehicles 100, 200, 300, 400 that is more suitable for moving the payload 10 from the first position A to the second position B. Further, the control unit 410 of the industrial vehicle 400 is configured to provide an instruction to that industrial vehicle to move the payload 10 from the first position A to the second position B. Alternatively, the control unit 410 of the industrial vehicle 400 is configured to determine which combination of the industrial vehicles 100, 200, 300, 400 that is more suitable for moving the payload 10 from the first position A to the second position B. In this case, the control unit 410 of the industrial vehicle 400 is configured to provide an instruction to each of those industrial vehicle 100, 200, 300, 400.

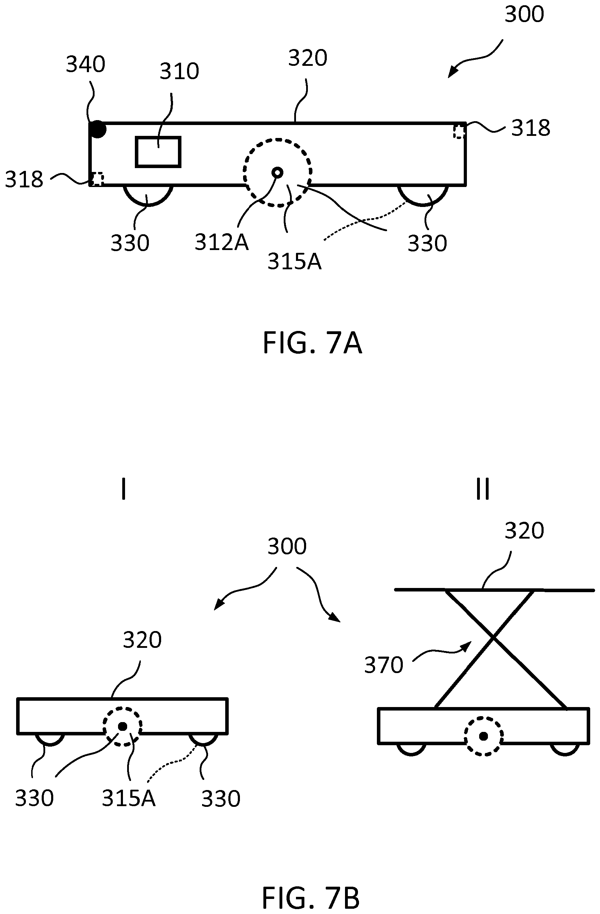

FIGS. 7A-D show different aspects of the industrial vehicle 300 of second carrying type, represented by a transporter. FIG. 7A discloses an industrial vehicle 300 of second carrying type, represented by the industrial vehicle 300. The industrial vehicle 300 has a carrying means 320 as can be seen in FIG. 7A. In this case, the carrying means 320 is a load surface on the upper part of the industrial vehicle 300. The carrying means 320 is suitable for carrying the payload 10.

As an alternative the carrying means 320 can be raised in the air by a lift 370 comprised in the industrial vehicle 300, FIG. 7B. A lift 370 should operate between a low position I and a high position II as seen in FIG. 7B. The lift 370 according to the preferred aspect is a scissor lift device. The industrial vehicle 300 may have a dedicated wireless interface for lifting and lowering the carrying means 320, such as a Bluetooth or an infrared interface.

The industrial vehicle 300 may have a limited base height. With base height is meant the height of the mean surface area unit comprising the carrying means 320, over the surface on which the industrial vehicle 300 is operating. Also base height is not altered if a lift 370 device is applied. The definition in this case is related to the position I as can be seen in FIG. 7B. The second position II is not to be understood as the base height according to this application. The base height is comprised between 50 mm - 350 mm. This height range defines a very well-functioning material handling system 100 that can be easily operated. It also allows for payloads 10, 20, 30 that extends for example in the order of a meter in the height dimension to be order picked without generating a goods and industrial vehicle 300 system that is extensively high. Further, the low base height allows for the system to be easily monitored by view by an operator. Also the relatively "low" industrial vehicle 300 can enter under warehouse racks, and thus further arrange a warehouse where individual units can manoeuvre more freely than if being higher and being obstructed by warehouse racks or shelf systems that are low.

According to an alternative the base height range is 100 mm-250 mm. This range is particularly advantageous as it resembles the dimension of the general pallet used in most warehouse situations. This base height range thus allows for applying the material handling system to a warehouse that is adapted for general pallet sizes that has already been implemented since long time. For example, the industrial vehicle 300 can enter under racks where the general pallets enters or the like.

According to a further alternative the height is 100 mm-200 mm, this height gives a narrow indication that is most suitable for a device of this kind that allows for both installation of needed hardware, but also allows for the device to not be higher than needed in order to achieve the needed advantages, in terms of applicability to a warehouse. In particular this range involves the standardised height 144 mm of a standardised EUR-pallet, Euro-pallet or EPAL-pallet. Thus if a warehouse on the floor level is adapted to the said pallets the industrial vehicle 300 will by having this height limitation be fully applicable.

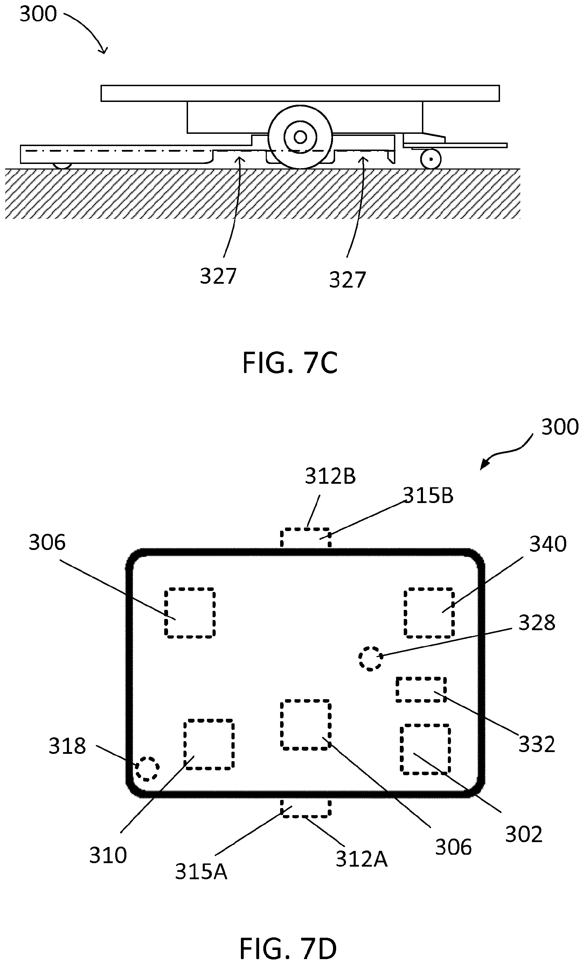

The maximal outer dimensions of the industrial vehicle 300 is preferred to be equal to or less a length of 1210 mm and a width of 810 mm. The size corresponds to the general dimensions of a standardised EUR-pallet, Euro-pallet or EPAL-pallet. Thus it is possible to design the industrial vehicle 300 with smaller dimensions, but it is not desirable to make the device larger than the stated width and length as this would be difficult to apply for a standard warehouse. FIG. 7C shows an industrial vehicle 300 in a top down view and a side view respectively according to an example. The components listed herein are arranged and positioned within the industrial vehicle 300 so as to further allow for an opening 327 in the chassis, arranged at a lowermost portion 29 of the chassis. FIG. 7C shows how the opening 327 provides a cavity underneath the industrial vehicle 300, which cavity is defined by sidewalls and upper abutment surface of the opening 327 and the underlying floor beneath the industrial vehicle 300. Such an opening 327 may be utilised by means of inserting material handling elements, such as a fork 122, 222, 222A, 222B, 223A, 223B or support legs 107, 107A, 107B, 207, 207A, 207B of a forklift therein.

FIG. 7D describes an example of the industrial vehicle 300 as a transporter. The industrial vehicle 300 comprises power source 302. The power source 302 is for example a battery, such as a lead battery, a lithium ion battery, a lithium polymer battery, or any other suitable power source.

Further, the industrial vehicle 300 comprises a drive motor 306. The motor 306 may be an electric motor. A particularly good electric motor is a brushless motor. In general any motor is applicable both DC and AC motor.

At least one drive wheel 315A, 315B is installed in the industrial vehicle 300. The first drive wheel 315A can have any position on the industrial vehicle 300. A preferred position is disclosed in FIGS. 7A and 7B, where the drive wheel 315A is positioned close to a longitudinal side of the industrial vehicle 300. The first drive wheel 315A having a rotational axle 312A can be installed as seen in FIG. 7A.

As an option a second drive wheel 315B having a rotational axle 312B is arranged on the industrial vehicle 300. The second drive wheel 315B is best positioned at the opposite longitudinal side of the first drive wheel 315A. As a preferred aspect the rotational axle 312B of the second drive wheel 315B is coaxial with the rotational axle 312A of the first rotational drive wheel 315A.

A stabilising support wheel 332 may be installed on the industrial vehicle 300. The movable support wheel 332 is preferably a swivelling wheel. In particular it is provided for a relatively low swivelling wheel compared with generally used swivelling wheels as known by the skilled person.

It can have any general configuration but is preferably a support wheel as described in the patent application EP application number 16 155 701.2.

The industrial vehicle 300 further has an antenna 340 for contact with the other industrial vehicles 100, 200, 300, 400. The antenna 340 is connected to a wireless interface, such as Bluetooth enabled interface, or a Wi-Fi interface or any other suitable radio interface for communication that is local. The antenna 340 is connected to the control unit 310 of the industrial vehicle 300. In general the control unit 310 is able to control all sensors 318 and communication devices of the industrial vehicle 300. The preferred aspect of the control unit 310 is that it is a main control unit 310. Thus if other control units are installed in the industrial vehicle 300, the main control unit 310 can communicate and control these sub control units. The control unit 310 comprises memory circuits for storing computer readable software. The control unit 310 also comprises a processor. This functionality of the control unit 310 may be incorporated in any control unit 110, 210, 310, 410 of any industrial vehicle 100, 200, 300, 400.

The industrial vehicle 300 further may comprise a navigation device 328. The navigation device 328 is preferably able to store and read a map of the warehouse. By for example using coded RFID transponders in the warehouse the navigation device 328 can determine its position in the warehouse. Other known navigation systems are possible to use, such that bar codes or QR codes that can be detected by the navigation device 328. In this case the navigation device 328 comprises a reader for RFID, bar codes or QR codes. It is also thinkable to use SLAM-Simultaneous Landscaping and Mapping or RTLS-Real Time Location System. Combinations of all mentioned navigation/identification systems is thinkable. This functionality may be incorporated in any of the industrial vehicles 100, 200, 300, 400.

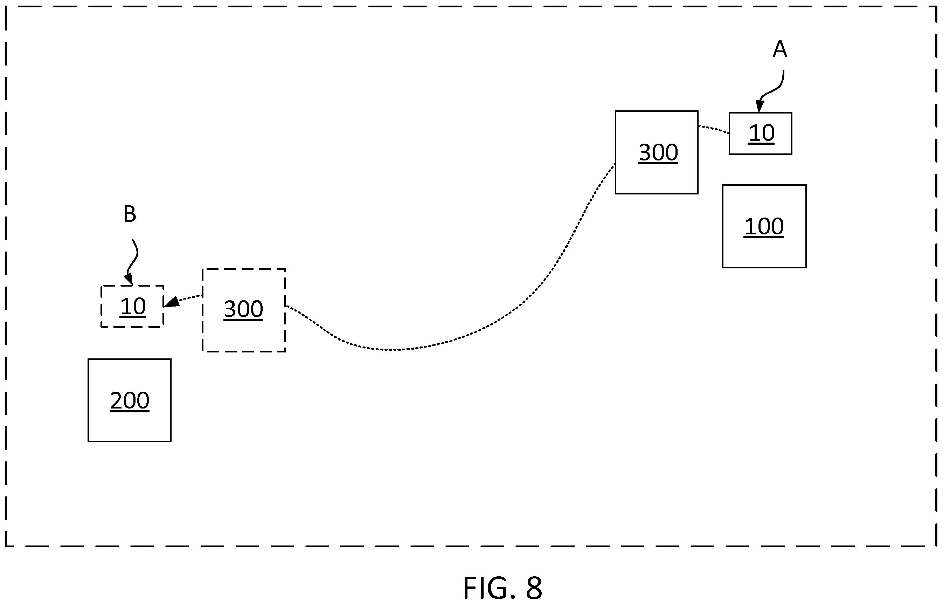

FIG. 8 shows an example of an area space comprising the payload 10 and three industrial vehicles 100, 200, 300, two of which are of the first carrying type 100, 200 and one of which is of the second carrying type 300. This example has similarities with the example shown in FIG. 3. However, in this example an additional third industrial vehicle 300 is present. The third industrial vehicle 300 comprises carrying means 320 of the second carrying type, i.e. carrying means 320 without lifting means, capable of receiving the payload 10 from an industrial vehicle comprising carrying means of the first carrying type. Each of the industrial vehicles 100, 200, 300 has, in their control unit 110, 210, 310, vehicle information comprising information of at least type of carrying means of its industrial vehicle and position data of the industrial vehicle. The second industrial vehicle 200 and the third industrial vehicle 300 sends its respective vehicle information to the first industrial vehicle 100 through wireless communication 50. Further, the industrial vehicle 100 has obtained payload information of the payload 10. The control unit 110 of the first industrial vehicle 100 now has access to the vehicle information of the first industrial vehicle 100, the second industrial vehicle 200 and the third industrial vehicle 300. In this case, both the first industrial vehicle 100 and the second industrial vehicle 200 are able to lift the payload 10 from the first position A, by means of the carrying means 120, 220 of the first carrying type and place the payload 10 on the second position B, by means of the carrying means 120, 220 of the first carrying type. The third industrial vehicle 300 comprises transporting means 330 and carrying means of the second type 320, which makes it suitable to move from a position nearby the first position A to a position nearby the second position B, by means of the transporting means 330 of the industrial vehicle 300 after receiving the payload 10 at its carrying means 320. Thus, the third industrial vehicle 300, comprising carrying means of the second type 320, needs assistance from the industrial vehicles 100, 200 comprising carrying means of the first type 120, 220, to put the payload 10 on its carrying means 320 and to remove the payload 10 from its carrying means 320.

From the position data of the industrial vehicles 100, 200, 300 and the payload 10, the control unit 110 of the first industrial vehicle 100 is able to determine that the distance between the first position A and the first industrial vehicle 100 and the distance between the first position A and the third industrial vehicle 300 is of the same. Further, the distance between the second industrial vehicle 200 and the first position A is larger than from the first position A to the first industrial vehicle 100 and the third industrial vehicle 300, respectively. Thus, the control unit 110 of the first industrial vehicle 100 determines, based on the obtained vehicle information, the obtained payload information and the obtained optimisation criteria, that a combination of all three industrial vehicles 100, 200, 300 is the most suitable solution for moving the payload 10 from the first position A to the second position B. The control unit 110 of the first industrial vehicle 100 provides, to the own industrial vehicle 100, an instruction to lift the payload 10 from the first position A, by means of the carrying means 120, and to place the payload 10 on the carrying means 220 of the second industrial vehicle 200. Further, the control unit 110 of the first industrial vehicle 100 provides, to the third industrial vehicle 300, an instruction to move close to the second position B. Yet further, the control unit 110 of the first industrial vehicle 100 provides, to the second industrial vehicle 300, an instruction to lift, by means of the carrying means 320, the payload 10 from the carrying means 220 of the second industrial vehicle 200 and to place the payload 10 on the second position B.

Further, the first industrial vehicle 100 may send its vehicle information to the second industrial vehicle 200 and/or the third industrial vehicle 300. Further, the second industrial vehicle 200 may send its vehicle information the third industrial vehicle 300 and the third industrial vehicle 300 may send its vehicle information the second industrial vehicle 200. Alternatively, the first industrial vehicle 100 may send vehicle information of the second industrial vehicle 200, the third industrial vehicle 300 and/or the payload information 10 to the second industrial vehicle 200 and/or the third industrial vehicle 300. In this case, the control unit 210 of second industrial vehicle 200 and/or the third industrial vehicle 300 may determine which of the industrial vehicles 100, 200, 300 that should perform each task to move the payload 10 from the first position A to the second position B. Since, any of the second industrial vehicle 200 and the third industrial vehicle 300 will have access to the same information as the first industrial vehicle 100, described in the example above, the outcome, in terms of the instruction sent to each of the industrial vehicles 100, 200, 300, will be the same regardless of which of the industrial vehicles 100, 200, 300 that performs the determination of the instruction sent to each of the industrial vehicles 100, 200, 300.

Thus, a system is described allowing any of the plurality of industrial vehicles 100, 200, 300 to send an instruction to any of the plurality of industrial vehicles 100, 200, 300.

Further, in relation to FIG. 8, the system of the plurality of industrial vehicles 100, 200, 300, may comprise a priority scheme to handle conflicting instructions is explained. In one example, the system is configured to set up a priority scheme between the plurality of industrial vehicles based on the vehicle information of each of the plurality of industrial vehicles 100, 200, 300.

In another example, the system is further configured to set up a priority scheme between the plurality of industrial vehicles 100, 200, 300 based on the number of information items in the vehicle information of the control unit 110, 210, 310 of each of the industrial vehicles 100, 200, 300. For illustrative purpose the following example is presented:
^{∗} the first industrial vehicle 100 has access to the vehicle information of the all three industrial vehicles 100, 200, 300;
^{∗} the second industrial vehicle 200 only has access to the vehicle information of the second industrial vehicle 200; and

Further, assume that the control unit 110, 210, 310 of each of the industrial vehicles 100, 200, 300 independently determines at least one instruction, based on the vehicle information accessible to that industrial vehicle 100, 200, 300. In this case, the outcome, in terms of the at least one instruction provided, will be different for each of the control units 110, 210, 310. The control unit 110 of the first industrial vehicle 100 will present instructions according to the example described above, where each of the industrial vehicles 100, 200, 300 receives an instruction to perform a part of moving the payload 10 from the first position A to the second position B. The control unit 210 of the second industrial vehicle 200 only has access to its own vehicle information and will therefore provide an instruction to the own industrial vehicle 200 to move the payload 10 from the first position A to the second position B by itself. However, the instruction provided from the control unit 110 of the first industrial vehicle 100 is based on a higher number of information items than the instruction provided from the control unit 210 of the second industrial vehicle 200, since the control unit 110 of the first industrial vehicle 100 has access to vehicle information from all three industrial vehicles 100, 200, 300, while the control unit 210 of the second industrial vehicle 200 only has access to the vehicle information from the second industrial vehicle 200. Thus, the instruction provided from the control unit 110 of the first industrial vehicle 100 has a higher priority than the instruction provided from the control unit 210 of the second industrial vehicle 200. Thus, the instruction provided from the control unit 110 of the first industrial vehicle 100 will overrule the instruction provided from the control unit 210 of the second industrial vehicle 200. Instead, the second industrial vehicle 200 will perform the instruction provided from the control unit 110 of the first industrial vehicle 100.

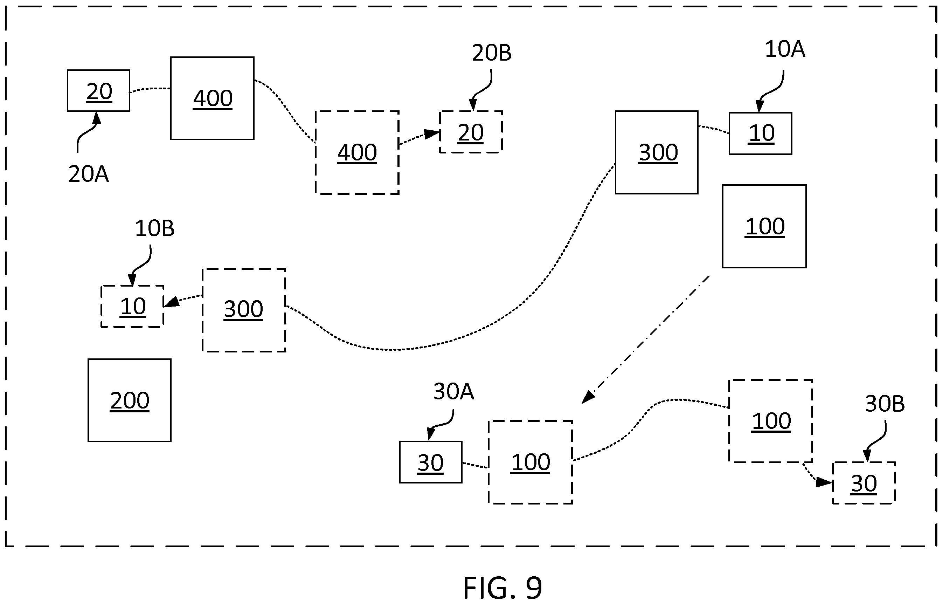

FIG. 9 illustrates an example of an area space comprising a plurality of payloads 10, 20, 30 and a plurality of industrial vehicles 100, 200, 300, 400. This example has similarities with the example shown in FIG. 8. However, in example of FIG.9 an additional fourth industrial vehicle 400 is present. The fourth industrial vehicle 400 comprises carrying means 420 of the first carrying type, i.e. carrying means 320 without lifting means, capable of receiving the payload 10, 20, 30 from a vehicle comprising carrying means of the first carrying type, i.e. the carrying means 420 comprises lifting means 421 attached to the industrial vehicle 400, wherein the lifting means 421 is configured to lift a payload 10, 20, 30. Further, in this example, except of that a (first) payload 10 should be moved from a first position (of the first payload) 10A to a second position (of the first payload) 10B, two additional payloads 20, 30 are present. The second payload 20 should be moved from a first position of the second payload 20A to a second position of the second payload 20B. Further, the third payload 30 should be moved from a first position of the third payload 30A to a second position of the third payload 30B. Thus, in this example, additional information is obtained by at least the control unit 110, 210, 310, 400 of one of the industrial vehicles 100, 200, 300, 400.

To simplify the example, assume that the control unit 110 of the first industrial vehicle 100 has obtained the payload information of each of the payloads 10, 20, 30. Further, assume that the control unit 110 of the first industrial vehicle 100 has obtained the vehicle information of each of the industrial vehicles 100, 200, 300, 400. Since the first industrial vehicle 100 and the third industrial vehicle 300 are in the vicinity of the first position 10A of the first payload 10 and the second industrial vehicle 200 is in the vicinity of the second position 10B of the first payload 10, as in the first example described in relation to FIG. 8, the control unit 110 of the first industrial vehicle 100 will send the same instructions as that example. That is, the control unit 110 of the first industrial vehicle 100 provides, to the own industrial vehicle 100, an instruction to lift the first payload 10 from the first position 10A, by means of the carrying means 120, and to place the payload 10 on the carrying means 220 of the second industrial vehicle 200. Further, the control unit 110 of the first industrial vehicle 100 provides, to the third industrial vehicle 300, an instruction to move close to the second position 10B of the first payload 10. Yet further, the control unit 110 of the first industrial vehicle 100 provides, to the second industrial vehicle 300, an instruction to lift, by means of the carrying means 320, the payload 10 from the carrying means 220 of the second industrial vehicle 200 and to place the payload 10 on the second position 10B.

Further, the fourth industrial vehicle 400 is in the vicinity of the second payload 20, i.e. in the vicinity of the first position 20A of the second payload 20. Thus, the control unit 110 of the first industrial vehicle 100 provides, to the fourth industrial vehicle 400, an instruction to move close to the first position 20A of the second payload 20, lift the second payload 20 from the first position 20A, by means of the carrying means 420, move close to the second position 20B of the second payload 20B, and place the payload 20 on the second position 20B, by means of the carrying means 420.

Yet further, the third payload 30 should be moved from the first position 30A to the second position 30B of the payload 30. Since each of the industrial vehicles 100, 200, 300, 400 already are scheduled with the moving of either the first payload 10 or the second payload, the moving of the third payload 30 will be put in queue until one of the industrial vehicles 100, 200, 300, 400 has fulfilled its instruction/task. The first industrial vehicle 100 will be the first of the industrial vehicles 100, 200, 300, 400 to fulfil its instruction, which is to lift the first payload 10 from the first position 10A, by means of the carrying means 120, and to place the payload on the carrying means 220 of the second industrial vehicle 200. Thus, the first industrial vehicle 100 may be provided with a second instruction, to move close to the first position 30A of the third payload 30, lift the third payload 30 from the first position 30A, by means of the carrying means 120, move close to the third position 30B of the third payload 30B, and place the payload 30 on the second position 30B, by means of the carrying means 120.

In this example, the instruction(s) to moving each of the payloads 10, 20, 30 has/have been treated separately. However, this has been done for the example to be clearer. Obviously, the control unit 110 of the industrial vehicle 100 may take into consideration, payload information from all the payloads 10, 20, 30, when determining and providing instructions to each of the industrial vehicles 100, 200, 300, 400. Depending on the optimisation criteria the outcome might be different. Further, the control unit 110 of the industrial vehicle 100 may continuously update the instructions based on new information of the obtained payload information and the obtained vehicle information.

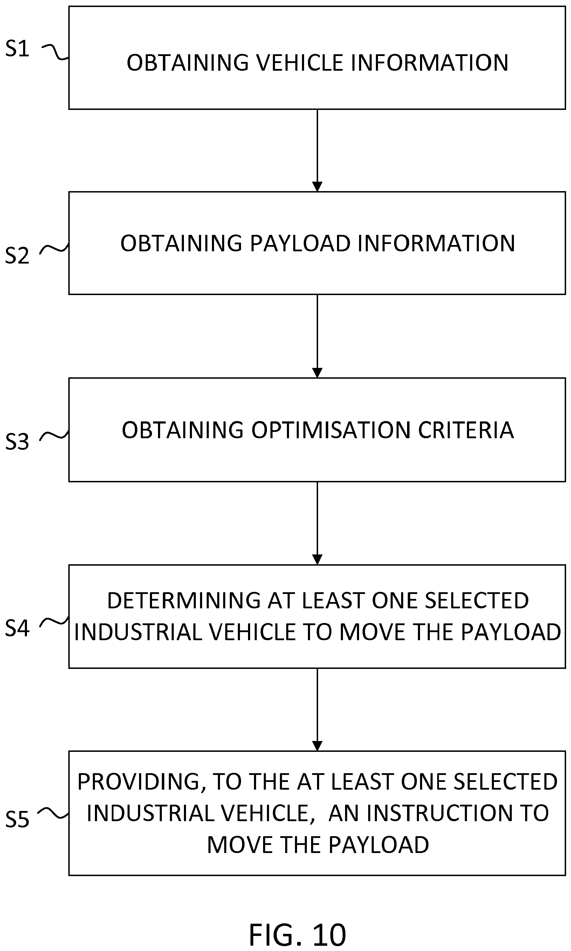

FIG. 10 illustrates a flowchart of a method, for optimisation of moving payload from a first position A to a second position B, carried out by the control unit 110, 210, 310, 410 of the industrial vehicle 100, 200, 300, 400. The method comprises the steps of:
- obtaining S1 vehicle information of at least one industrial vehicle 100, 200, 300, 400, said vehicle information comprising position data of at least one industrial vehicle 100, 200, 300, 400;
- obtaining S2 payload information of a payload 10, said payload information comprising position data of the payload 10;
- obtaining S3 optimisation criteria comprising at least time required until the payload 10 has been moved from the first position A to the second position B;
- determining S4, based on the obtained vehicle information, the obtained payload information and the obtained optimisation criteria, at least one selected industrial vehicle, of the at least one industrial vehicle 100, 200, 300, 400, to move the payload 10;
- providing S5, to the at least one selected industrial vehicle 100, 200, 300, 400, an instruction to move the payload 10.

Further, all other features described in relation to may be incorporated into the method. In order to avoid unnecessary repetition, explicit reproduction of the all features of FIGS. 1-9 in method form is not made. However, all features of FIGS. 1-9 are implicitly included in the method described above.

Additionally, the disclosure relates to a computer program comprising instructions which, when the program is executed by the control unit 110, 210, 310, 410, cause the control unit to carry out the method. Further, the disclosure relates to a computer-readable medium comprising instructions which, when executed by the control unit 110, 210, 310, 410, cause the control unit to carry out the method.

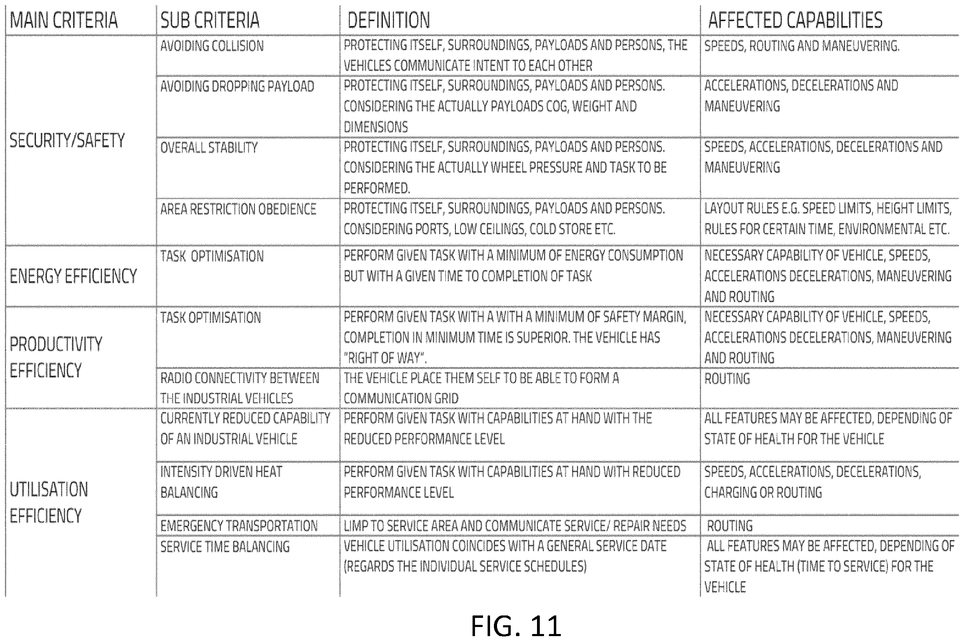

In FIG. 11 optimisation criteria are listed. The optimisation criteria comprise time required until the payload 10, 20, 30 has been moved from the first position A to the second position B. Further, the optimisation criteria may comprise total time required until all the payloads 10, 20, 30 have been moved from their respective first position 10A, 20A, 30A to their respective second position 10B, 20B, 30B. Yet further, the optimisation criteria may comprise at least one of the following criteria:
^{∗} security and safety, comprising at least one of: avoiding collision with other industrial vehicles 100, 200, 300, 400, payloads 10, 20, 30 and other obstacles; avoiding unintentional dropping of the payload 10, 20, 30; stability of the industrial vehicle 100, 200, 300, 400 regarding actual wheel pressure of the industrial vehicle 100, 200, 300, 400; and area restriction obedience considering ports and ceilings;
^{∗} energy efficiency, comprising task optimisation by performing a given task with a minimum of energy consumption;
^{∗} productivity efficiency, comprising at least one of: task optimisation by performing a given task with a minimum of safety margin; and radio connectivity optimisation by controlling that each of the industrial vehicles 100, 200, 300, 400 have radio connection with as many other industrial vehicles 100, 200, 300, 400 as possible;
*utilisation efficiency, comprising at least one of: taking into account if an industrial vehicle 100, 200, 300, 400 has reduced capability; taking into account if intensity driven heat balancing is needed; taking into account if emergency transportation is needed; and taking service time balancing into account.

In one aspect of the invention, the optimisation criteria comprises time required until the payload 10, 20, 30 has been moved from the first position 10A, 20A, 30A to the second position 10B, 20B, 30B and security and safety including at least avoiding collision with other industrial vehicles 100, 200, 300, 400, payloads 10, 20, 30 and other obstacles, and avoiding unintentional dropping of the payload 10, 20, 30. These optimisation criteria will allow the industrial vehicles 100, 200, 300, 400 to be fully autonomous.

The following paragraphs are included in order to define the different optimisation criteria and describe which capabilities or parameters that are affected by each optimisation criterion, in order to improve autonomous aspects of the fleet of industrial vehicles 100, 200, 300, 400:

The optimisation criterion to avoid collision with other industrial vehicles 100, 200, 300, 400, payloads 10, 20, 30 and other obstacles is including communicating instructions and tasks to other industrial vehicles 100, 200, 300, 400. The optimisation criterion to avoid collision is affecting speed, acceleration, deceleration, routing and manoeuvring of the industrial vehicles 100, 200, 300, 400.

The optimisation criterion to avoid unintentional dropping of payload 10, 20, 30 is including considering weight and dimensions of the payload 10, 20, 30. The optimisation criterion to avoid unintentional dropping of payload 10, 20, 30 may also include considering centre of gravity of the payload 10, 20, 30. The optimisation criterion to avoid unintentional dropping of payload 10, 20, 30 is affecting speed, acceleration, deceleration and manoeuvring of the industrial vehicles 100, 200, 300, 400.

The optimisation criterion related to overall stability is comprising stability of the industrial vehicle 100, 200, 300, 400 regarding actual wheel pressure of the industrial vehicle 100, 200, 300, 400, which is affecting speed, acceleration, deceleration and manoeuvring of the industrial vehicle 100, 200, 300, 400.

The optimisation criterion related to area restriction obedience is comprising protecting the own and other industrial vehicles 100, 200, 300, 400, considering ports and ceilings and other obstacles in the area. The optimisation criterion may further relate to the temperature in the area. The optimisation criterion related to area restriction obedience is affecting speed limits, height limits, time restrictions due to temperature etc.

The optimisation criterion of energy efficiency is comprising task optimisation by performing a given task with a minimum of energy consumption in order to complete the task. The optimisation criterion of energy efficiency is affecting speed, acceleration, deceleration, manoeuvring and routing of the industrial vehicle 100, 200, 300, 400. Further, the optimisation criterion of energy efficiency may affect other capabilities of industrial vehicle 100, 200, 300, 400, such as the lifting means 121, 221, 421 etc.

The optimisation criterion of productivity efficiency may comprise task optimisation by performing a given task with a minimum of safety margin, which is affecting speed, acceleration, deceleration, manoeuvring and routing of the industrial vehicle 100, 200, 300, 400. Further, the optimisation criterion may affect other capabilities of industrial vehicle 100, 200, 300, 400, such as the lifting means 121, 221, 421 etc.

Further, the optimisation criterion of productivity efficiency may comprise radio connectivity optimisation by controlling that each of the industrial vehicles 100, 200, 300, 400 have radio connection with as many other industrial vehicles 100, 200, 300, 400 as possible. In order to accomplish maximum connectivity, the industrial vehicles 100, 200, 300, 400 may form a communication grid. The optimisation criterion of radio connectivity optimisation is affecting routing of the industrial vehicles 100, 200, 300, 400.

The optimisation criterion of utilisation efficiency may comprise taking into account if an industrial vehicle 100, 200, 300, 400 has reduced capability, which includes performing a given task with the capabilities at hand with the reduced performance level. This optimisation criterion of utilisation efficiency may affect any features of the industrial vehicle 100, 200, 300, 400 depending on the state of health of the industrial vehicle 100, 200, 300, 400.

Further, the optimisation criterion of utilisation efficiency may comprise taking into account if intensity driven heat balancing is needed, which is including performing a given task with the capabilities at hand with the reduced performance level. This optimisation criterion of utilisation efficiency may affect speed, acceleration, deceleration, charging and/or routing of the industrial vehicle 100, 200, 300, 400.

Yet further, the optimisation criterion of utilisation efficiency may comprise taking into account if emergency transportation is needed, which includes routing to service area and communicating that service is needed. This optimisation criterion of utilisation efficiency is affecting routing of the industrial vehicle 100, 200, 300, 400.

The optimisation criterion of utilisation efficiency may also comprise taking service time balancing into account, which means that the utilisation of the industrial vehicle 100, 200, 300, 400 coincides with a general service date. This optimisation criterion of utilisation efficiency may affect any features of the industrial vehicle 100, 200, 300, 400 depending on the state of health of the industrial vehicle 100, 200, 300, 400.

### List of reference numerals

- 10: (first) payload
- 20: second payload
- 30: third payload
- A: first position
- B: second position
- 10A: first position of the first payload
- 10B: second position of the first payload
- 20A: first position of the second payload
- 20B: second position of the second payload
- 30A: first position of the third payload
- 30B: second position of the third payload
- 50: wireless communication
- 100: (first) industrial vehicle
- 102: mast
- 107: support leg(s)
- 109: horizontal support leg hydraulic cylinder(s)
- 110: control unit
- 111: lever(s)
- 113: second wheel(s)
- 115: first wheel(s)
- 116: additional wheel(s)
- 118: sensor(s)
- 120: carrying means
- 121: lifting means
- 122: fork(s)
- 130: transporting means
- 140: antenna
- 200: (second) industrial vehicle
- 202: mast
- 203: telescopic element
- 206: drive motor(s)
- 207: support leg(s)
- 210: control unit
- 213: second wheel(s)
- 214: motor
- 214A: hydraulic pump
- 215: first wheel(s)
- 216: additional wheel(s)
- 217: holder
- 218: sensor(s)
- 220: carrying means of first type
- 221: lifting means
- 222: fork(s)
- 223: outer end element(s)
- 230: transporting means
- 240: antenna
- 300: (third) industrial vehicle
- 302: power source
- 306: drive motor
- 310: control unit
- 312: rotational axle
- 315: first drive wheel
- 318: sensor(s)
- 320: carrying means of second type
- 327: opening
- 328: navigation device
- 330: transporting means
- 332: stabilising support wheel
- 340: antenna
- 370: lift
- 400: (fourth) industrial vehicle
- 410: control unit
- 418: sensor(s)
- 420: carrying means of first type
- 421: lifting means
- 422: arm
- 424: end effector
- 424A: impactive type of end effector
- 424B: ingressive type of end effector
- 424C: astrictive type of end effector
- 424D: contigutive type of end effector
- 426: joint(s)
- 430: transporting means
- 440: antenna

## Claims

1. An industrial vehicle (100, 200, 300, 400) for optimisation of moving payload (10, 20, 30) from a first position (A) to a second position (B), the industrial vehicle comprising:
- control unit (110, 210, 310, 410) for controlling the industrial vehicle;
- carrying means (120, 220, 320, 420) for carrying a payload (10, 20, 30);
- transporting means (130, 230, 330, 430) for transporting the industrial vehicle; and
- antenna (140, 240, 340, 440) for receiving and sending information;
wherein the control unit is connected to the carrying means, the transporting means and the antenna;
**characterised in that**
said control unit being configured to:
obtain vehicle information of a plurality of industrial vehicles (100, 200, 300, 400), said vehicle information comprising position data;
obtain payload information of a payload (10, 20, 30), said payload information comprising position data of the payload;
obtain optimisation criteria comprising at least the time required to move the payload from the first position to the second position;
determine, based on the obtained vehicle information, the obtained payload information and the obtained optimisation criteria, at least one selected industrial vehicle (100, 200, 300, 400), of the plurality of industrial vehicles (100, 200, 300, 400),
to move the payload;
provide, to the at least one selected industrial vehicle, an instruction to move the payload.

2. The industrial vehicle according to claim 1, wherein said carrying means is:
a first carrying type (100, 200, 400), comprising lifting means (122, 222, 422) attached to the vehicle, said lifting means is configured to lift the payload; or
a second carrying type (300), without lifting means, capable of receiving the payload from a vehicle comprising carrying means of the first carrying type;
and wherein said vehicle information comprises information of type of carrying means of the at least one industrial vehicle.

3. The industrial vehicle according to claim 1 or claim 2, wherein said control unit is configured to instruct a combination of industrial vehicles of the first carrying type to move the payload from the first position to the second position.

4. The industrial vehicle according to claim 2, wherein said control unit is configured to instruct a combination of industrial vehicles to move the payload from the first position to the second position, wherein an industrial vehicle of the first carrying type (100, 200, 400) is configured to:
place, by means of the lifting means, the payload on the carrying means of an industrial vehicle of the second carrying type (300); and/or
remove, by means of the lifting means, the payload from the carrying means of an industrial vehicle of the second carrying type (300); and/or
place, by means of the lifting means, the payload on the second position.

5. The industrial vehicle according to any of the preceding claims, wherein said lifting means comprises at least one fork (122, 222).

6. The industrial vehicle according to any of the preceding claims, wherein said lifting means comprises an arm (422) attached to the vehicle, said arm comprising an end effector (424).

7. The industrial vehicle according to any of claims 2-6, wherein said vehicle information comprises information of which payload dimensions the lifting means is allowed to carry; and
said payload information comprises information of dimensions of the payload.

8. The industrial vehicle according to any of claims 2-7, wherein said vehicle information comprises information of which payload weight the lifting means is allowed to carry;
and
said payload information comprises information of weight of the payload.

9. The industrial vehicle according to any of claims 2-8, wherein said vehicle information comprises information of maximum lift height of the lifting means; and
said payload information comprises height information of the payload.

10. The industrial vehicle according to any of the preceding claims, wherein said optimisation criteria further comprises at least one of the following criteria:
^{∗} security and safety, comprising at least one of: avoiding collision with other industrial vehicles (100, 200, 300, 400), payloads (10, 20, 30) and other obstacles; avoiding unintentional dropping of the payload; stability of the industrial vehicle regarding actual wheel pressure of the industrial vehicle; and area restriction obedience considering ports and ceilings;
^{∗} energy efficiency, comprising task optimisation by performing a given task with a minimum of energy consumption;
^{∗} productivity efficiency, comprising at least one of: task optimisation by performing a given task with a minimum of safety margin; and radio connectivity optimisation by controlling that each of the industrial vehicles have radio connection with as many other industrial vehicles as possible.
^{∗} utilisation efficiency, comprising at least one of: taking into account if an industrial vehicle (100, 200, 300, 400) has reduced capability; taking into account if intensity driven heat balancing is needed; taking into account if emergency transportation is needed; and taking service time balancing into account.

11. A method for optimisation of moving payload from a first position (A) to a second position (B), **characterized in that** the method being carried out by a control unit (110, 210, 310, 410) of an industrial vehicle (100, 200, 300, 400),
the method comprising the steps of:
obtaining (S1) vehicle information of a plurality of industrial vehicles (100, 200, 300, 400), said vehicle information comprising position data;
obtaining (S2) payload information of a payload (10, 20, 30), said payload information comprising position data of the payload;
obtaining (S3) optimisation criteria comprising at least the time required to move the payload from the first position to the second position;
determining (S4), based on the obtained vehicle information, the obtained payload information and the obtained optimisation criteria, at least one selected industrial vehicle (100, 200, 300, 400), of the plurality of industrial vehicles (100, 200, 300, 400), to move the payload;
providing (S5), to the at least one selected industrial vehicle, an instruction to move the payload.

12. The method according to claim 11, wherein the industrial vehicle comprising:
- control unit (110, 210, 310, 410) for controlling the industrial vehicle;
- carrying means (120, 220, 320, 420) for carrying a payload (10, 20, 30);
- transporting means (130, 230, 330, 430) for transporting the industrial vehicle; and
- antenna (140, 240, 340, 440) for receiving and sending information;
wherein the control unit is connected to the carrying means, the transporting means and the antenna.

13. A computer program comprising instructions which, when the program is executed by the control unit, cause said control unit to carry out the method according to claim 11 or claim 12.

14. A computer-readable medium comprising instructions which, when executed by the control unit, cause said control unit to carry out the method according to claim 11 or claim 12.

15. A system for optimisation of moving payload comprising a plurality of industrial vehicles (100, 200, 300, 400) according to any of claims 1-10, wherein the system is configured to allow any of the plurality of industrial vehicles to send the instruction to any of the plurality of industrial vehicles.

16. The system according to claim 15, wherein the system is configured to set up a priority scheme between the plurality of industrial vehicles based on said vehicle information of each of the plurality of industrial vehicles.

17. The system according to claim 16, wherein the system is further configured to set up the priority scheme between the plurality of industrial vehicles based on the number of information items of the control unit, so that when two or more industrial vehicles send conflicting instructions to a selected industrial vehicle, the instruction from the industrial vehicle having a higher number of information items in the vehicle information and/or the payload information is prioritized.

18. The system according to claim 16 or claim 17, wherein the system is further configured to set up the priority scheme between the plurality of industrial vehicles based on calculation capabilities of the control unit of each of the industrial vehicles.

## Patentansprüche

1. Industriefahrzeug (100, 200, 300, 400) zur Optimierung von sich von einer ersten Position (A) zu einer zweiten Position (B) bewegender Nutzlast (10, 20, 30), wobei das Industriefahrzeug Folgendes umfasst:
- eine Steuereinheit (110, 210, 310, 410) zum Steuern des Industriefahrzeugs;
- Tragmittel (120, 220, 320, 420) zum Tragen einer Nutzlast (10, 20, 30);
- Transportmittel (130, 230, 330, 430) zum Transportieren des Industriefahrzeugs; und
- eine Antenne (140, 240, 340, 440) zum Empfangen und Senden von Information;
wobei die Steuereinheit mit den Tragmitteln, den Transportmitteln und der Antenne verbunden ist;
**dadurch gekennzeichnet, dass**
die Steuereinheit für Folgendes eingerichtet ist:
Erhalten von Fahrzeuginformation einer Mehrheit von Industriefahrzeugen (100, 200, 300, 400), wobei die Fahrzeuginformation Positionsdaten umfasst;
Erhalten von Nutzlastinformation einer Nutzlast (10, 20, 30), wobei die Nutzlastinformation Positionsdaten der Nutzlast umfasst;
Erhalten von Optimierungskriterien umfassend mindestens die notwendige Zeit zum Bewegen der Nutzlast von der ersten Position in die zweite Position;
Ermitteln, basierend auf der erhaltenen Fahrzeuginformation, der erhaltenen Nutzlastinformation und den erhaltenen Optimierungskriterien, mindestens eines ausgewählten Industriefahrzeugs (100, 200, 300, 400) der Mehrheit von Industriefahrzeugen (100, 200, 300, 400) zum Bewegen der Nutzlast;
Bereitstellen, für das mindestens eine ausgewählte Industriefahrzeug, einer Anweisung zum Bewegen der Nutzlast.

2. Industriefahrzeug nach Anspruch 1, wobei das Tragmittel Folgendes ist:
eine erste Tragvariante (100, 200, 400), umfassend Hebemittel (122, 222, 422), verbunden mit dem Fahrzeug, wobei das Hebemittel dafür ausgelegt ist, die Nutzlast zu heben; oder
eine zweite Tragvariante (300), ohne Hebemittel, die die Nutzlast von einem Fahrzeug, umfassend Tragmittel der ersten Tragvariante, empfangen kann;
und wobei die Fahrzeuginformation Information der Variante von Tragmitteln des mindestens einen Industriefahrzeugs umfasst.

3. Industriefahrzeug nach Anspruch 1 oder 2, wobei die Steuereinheit dafür ausgelegt ist, eine Kombination von Industriefahrzeugen der ersten Tragvariante dazu anzuweisen, die Nutzlast von der ersten Position in die zweite Position zu bewegen.

4. Industriefahrzeug nach Anspruch 2, wobei die Steuereinheit dafür ausgelegt ist, eine Kombination von Industriefahrzeugen dazu anzuweisen, die Nutzlast von der ersten Position in die zweite Position zu bewegen, wobei ein Industriefahrzeug der ersten Tragvariante (100, 200, 400) für Folgendes ausgelegt ist:
Anordnen, mittels des Hebemittels, der Nutzlast auf dem Tragmittel eines Industriefahrzeugs der zweiten Tragvariante (300); und/oder
Entfernen, mittels des Hebemittels, der Nutzlast vom Tragmittel eines Industriefahrzeugs der zweiten Tragvariante (300); und/oder
Anordnen, mittels des Hebemittels, der Nutzlast in der zweiten Position.

5. Industriefahrzeug nach einem der vorgehenden Ansprüche, wobei das Hebemittel mindestens eine Gabel (122, 222) umfasst.

6. Industriefahrzeug nach einem der vorgehenden Ansprüche, wobei das Hebemittel einen am Fahrzeug befestigten Arm (422) umfasst, wobei der Arm einen Endeffektor (424) umfasst.

7. Industriefahrzeug nach einem der Ansprüche 2-6, wobei die Fahrzeuginformation Information darüber, welche Nutzlastabmessungen das Hebemittel tragen darf, umfasst; und wobei die Nutzlastinformation Information über Abmessungen der Nutzlast umfasst.

8. Industriefahrzeug nach einem der Ansprüche 2-7, wobei die Fahrzeuginformation Information darüber, welches Nutzlastgewicht das Hebemittel tragen darf, umfasst; und wobei die Nutzlastinformation Information über das Gewicht der Nutzlast umfasst.

9. Industriefahrzeug nach einem der Ansprüche 2-8, wobei die Fahrzeuginformation Information über die maximale Hebehöhe des Hebemittels umfasst; und
wobei die Nutzlastinformation Höheninformation über die Nutzlast umfasst.

10. Industriefahrzeug nach einem der vorgehenden Ansprüche, wobei die Optimierungskriterien weiter mindestens eines der folgenden Kriterien umfassen:
* Sicherung und Sicherheit, umfassend mindestens eines von: Vermeiden von Kollision mit anderen Industriefahrzeugen (100, 200, 300, 400), Nutzlasten (10, 20, 30) und anderen Hindernissen; Vermeiden von unbeabsichtigtem Herunterfallen der Nutzlast; Stabilität des Industriefahrzeugs bezüglich des tatsächlichen Raddrucks des Industriefahrzeugs; und Gebietbeschränkungeinhaltungsberücksichtigenden Toren und Decken;
* Energiewirksamkeit, umfassend Auftragsoptimierung durch Ausführen eines gegebenen Auftrags mit einem minimalen Energieverbrauch;
* Produktivitätswirksamkeit, umfassend mindestens eine von: Auftragsoptimierung durch Ausführen eines gegebenen Auftrags mit einer minimalen Sicherheitsspanne; und Funkverbindungsoptimierung durch Prüfen, dass jedes der Industriefahrzeuge eine Funkverbindung mit so vielen anderen Industriefahrzeugen wie möglich hat;
* Nutzungswirksamkeit, umfassend mindestens eines von: Berücksichtigen, ob ein Industriefahrzeug (100, 200, 300, 400) ein verringertes Leistungsvermögen hat; Berücksichtigen, ob ein intensitätsgetriebener Wärmeausgleich notwendig ist; Berücksichtigen, ob Notfalltransport notwendig ist; und Berücksichtigen eines Wartungszeitraumausgleichs.

11. Verfahren zur Optimierung des Bewegens der Nutzlast von einer ersten Position (A) in eine zweite Position (B), **dadurch gekennzeichnet, dass** das Verfahren durch eine Steuereinheit (110, 210, 310, 410) eines Industriefahrzeugs (100, 200, 300, 400) ausgeführt wird,
wobei das Verfahren die folgenden Schritte umfasst:
Erhalten (S1) von Fahrzeuginformation einer Mehrheit von Industriefahrzeugen (100, 200, 300, 400), wobei die Fahrzeuginformation Positionsdaten umfasst;
Erhalten (S2) von Nutzlastinformation einer Nutzlast (10, 20, 30), wobei die Nutzlastinformation Positionsdaten der Nutzlast umfasst;
Erhalten (S3) von Optimierungskriterien umfassend mindestens die notwendige Zeit zum Bewegen der Nutzlast von der ersten Position in die zweite Position zu bewegen;
Ermitteln (S4), basierend auf der erhaltenen Fahrzeuginformation, der erhaltenen Nutzlastinformation und den erhaltenen Optimierungskriterien, mindestens eines ausgewählten Industriefahrzeugs (100, 200, 300, 400) der Mehrheit von Industriefahrzeugen (100, 200, 300, 400) zum Bewegen der Nutzlast;
Bereitstellen (S5), für das mindestens eine ausgewählte Industriefahrzeug, einer Anweisung zum Bewegen der Nutzlast.

12. Verfahren nach Anspruch 11, wobei das Industriefahrzeug Folgendes umfasst:
- eine Steuereinheit (110, 210, 310, 410) zum Steuern des Industriefahrzeugs;
- Tragmittel (120, 220, 320, 420) zum Tragen einer Nutzlast (10, 20, 30);
- Transportmittel (130, 230, 330, 430) zum Transportieren des Industriefahrzeugs; und
- eine Antenne (140, 240, 340, 440) zum Empfangen und Senden von Information;
wobei die Steuereinheit mit den Tragmitteln, den Transportmitteln und der Antenne verbunden ist.

13. Computerprogramm, umfassend Anweisungen, die, wenn das Programm durch die Steuereinheit ausgeführt wird, die Steuereinheit dazu veranlassen, das Verfahren nach Anspruch 11 oder 12 auszuführen.

14. Computerlesbares Medium, umfassend Anweisungen, die, wenn sie durch die Steuereinheit ausgeführt werden, die Steuereinheit dazu veranlasst, das Verfahren nach Anspruch 11 oder 12 auszuführen.

15. System zur Optimierung des Bewegens einer Nutzlast, umfassend eine Mehrheit von Industriefahrzeugen (100, 200, 300, 400) nach einem der Ansprüche 1-10, wobei das System dafür ausgelegt ist, zu erlauben, dass eines der Mehrheit von Industriefahrzeugen die Anweisung an irgendeines der Mehrheit von Industriefahrzeugen überträgt.

16. System nach Anspruch 15, wobei das System dafür ausgelegt ist, ein Prioritätschema zwischen der Mehrheit von Industriefahrzeugen basierend auf der Fahrzeuginformation jedes der Mehrheit von Industriefahrzeugen aufzustellen.

17. System nach Anspruch 16, wobei das System weiter dafür ausgelegt ist, das Prioritätsschema zwischen der Mehrheit von Industriefahrzeugen basierend auf der Anzahl von Informationselementen der Steuereinheit aufzustellen, so dass wenn zwei oder mehrere Industriefahrzeuge widersprüchliche Anweisungen an ein ausgewähltes Industriefahrzeug übertragen, wird die Anweisung vom Industriefahrzeug mit einer höheren Anzahl von Informationselementen in der Fahrzeuginformation und/oder der Nutzlastinformation priorisiert.

18. System nach Anspruch 16 oder 17, wobei das System weiter dafür ausgelegt ist, ein Prioritätschema zwischen der Mehrheit von Industriefahrzeugen basierend auf dem Berechnungsvermögen der Steuereinheit jedes der Mehrheit von Industriefahrzeugen aufzustellen.

## Revendications

1. Véhicule industriel (100, 200, 300, 400) pour l'optimisation du déplacement d'une charge utile (10, 20, 30) d'une première position (A) à une deuxième position (B), le véhicule industriel comprenant :
- une unité de commande (110, 210, 310, 410) pour commander le véhicule industriel ; un moyen de portage (120, 220, 320, 420) pour porter une charge utile (10, 20, 30) ;
- un moyen de transport (130, 230, 330, 430) pour transporter le véhicule industriel ; et
- une antenne (140, 240, 340, 440) pour recevoir et envoyer des informations ;
dans lequel l'unité de commande est connectée au moyen de portage, au moyen de transport et à l'antenne ;
**caractérisé en ce que**
ladite unité de commande étant configurée pour :
obtenir des informations de véhicule d'une pluralité de véhicules industriels (100, 200, 300, 400), lesdites informations de véhicule comprenant des données de position ;
obtenir des informations de charge utile d'une charge utile (10, 20, 30), lesdites informations de charge utile comprenant des données de position de la charge utile ;
obtenir des critères d'optimisation comprenant au moins le temps nécessaire pour déplacer la charge utile de la première position à la deuxième position ;
déterminer, sur la base des informations de véhicule obtenues, des informations de charge utile obtenues et des critères d'optimisation obtenus, au moins un véhicule industriel sélectionné (100, 200, 300, 400), de la pluralité de véhicules industriels (100, 200, 300, 400),
pour déplacer la charge utile ;
fournir, à l'au moins un véhicule industriel sélectionné, une instruction de déplacer la charge utile.

2. Véhicule industriel selon la revendication 1, dans lequel ledit moyen de portage est : un premier type de portage (100, 200, 400), comprenant un moyen de levage (122, 222, 422) fixé au véhicule, ledit moyen de levage étant configuré pour soulever la charge utile ; ou
un deuxième type de portage (300), sans un moyen de levage, apte à recevoir la charge utile d'un véhicule comprenant un moyen de portage du premier type de portage ;
et dans lequel lesdites informations de véhicule comprennent des informations de type de moyen de portage de l'au moins un véhicule industriel.

3. Véhicule industriel selon la revendication 1 ou la revendication 2, dans lequel ladite unité de commande est configurée pour ordonner à une combinaison de véhicules industriels du premier type de transport de déplacer la charge utile de la première position à la deuxième position.

4. Véhicule industriel selon la revendication 2, dans lequel ladite unité de commande est configurée pour ordonner à une combinaison de véhicules industriels de déplacer la charge utile de la première position à la deuxième position, dans lequel un véhicule industriel du premier type de portage (100, 200, 400) est configuré pour :
placer, au moyen du moyen de levage, la charge utile sur le moyen de portage d'un véhicule industriel du deuxième type de portage (300) ; et / ou
retirer, au moyen du moyen de levage, la charge utile à partir du moyen de portage d'un véhicule industriel du deuxième type de portage (300) ; et / ou
placer, au moyen du moyen de levage, la charge utile sur la deuxième position.

5. Véhicule industriel selon l'une quelconque des revendications précédentes, dans lequel ledit moyen de levage comprend au moins une fourche (122, 222).

6. Véhicule industriel selon l'une quelconque des revendications précédentes, dans lequel ledit moyen de levage comprend un bras (422) attaché au véhicule, ledit bras comprenant un effecteur d'extrémité (424).

7. Véhicule industriel selon l'une quelconque des revendications 2 à 6, dans lequel lesdites informations sur le véhicule comprennent des informations sur les dimensions de charge utile que le moyen de levage est autorisé à transporter ; et
lesdites informations de charge utile comprennent des informations de dimensions de la charge utile.

8. Véhicule industriel selon l'une quelconque des revendications 2 à 7, dans lequel lesdites informations de véhicule comprennent des informations sur le poids de charge utile que le moyen de levage est autorisé à transporter ; et
lesdites informations de charge utile comprennent des informations de poids de la charge utile.

9. Véhicule industriel selon l'une quelconque des revendications 2 à 8, dans lequel lesdites informations de véhicule comprennent des informations sur la hauteur de levage maximale du moyen de levage ; et
lesdites informations de charge utile comprennent des informations de hauteur de la charge utile.

10. Véhicule industriel selon l'une quelconque des revendications précédentes, dans lequel lesdits critères d'optimisation comprennent en outre au moins l'un des critères suivants :
* la sécurité et la sûreté, comprenant au moins l'un parmi : l'échappement des collisions avec d'autres véhicules industriels (100, 200, 300, 400), des charges utiles (10, 20, 30) et d'autres obstacles ; l'échappement de la chute involontaire de la charge utile ; la stabilité du véhicule industriel par rapport à la pression réelle des roues du véhicule industriel ; et l'obéissance à la restriction de zone compte tenu des ports et des plafonds ;
* l'efficacité énergétique, comprenant l'optimisation des tâches en réalisant une tâche donnée avec un minimum de consommation d'énergie ;
* l'efficacité de productivité, comprenant au moins l'un parmi : l'optimisation des tâches en effectuant une tâche donnée avec un minimum de marge de sécurité ; et l'optimisation de la connectivité radio en vérifiant que chacun des véhicules industriels a une connexion radio avec autant d'autres véhicules industriels que possible ;
* l'efficacité d'utilisation, comprenant au moins l'une parmi : la prise en compte si un véhicule industriel (100, 200, 300, 400) a une capacité réduite ; la prise en compte si un équilibrage thermique piloté par l'intensité est nécessaire ; la prise en compte si un transport d'urgence est nécessaire ; et la prise en compte de l'équilibrage du temps de service.

11. Procédé d'optimisation du déplacement d'une charge utile d'une première position (A) à une deuxième position (B), **caractérisé en ce que** le procédé est exécuté par une unité de commande (110, 210, 310, 410) d'un véhicule industriel (100, 200, 300, 400),
le procédé comprenant les étapes consistant à :
obtenir (S1) des informations de véhicule d'une pluralité de véhicules industriels (100, 200, 300, 400), lesdites informations de véhicule comprenant des données de position ;
obtenir (S2) des informations de charge utile d'une charge utile (10, 20, 30), lesdites informations de charge utile comprenant des données de position de la charge utile ;
obtenir (S3) des critères d'optimisation comprenant au moins le temps nécessaire pour déplacer la charge utile de la première position à la deuxième position ;
déterminer (S4), sur la base des informations de véhicule obtenues, des informations de charge utile obtenues et des critères d'optimisation obtenus, au moins un véhicule industriel sélectionné (100, 200, 300, 400), de la pluralité de véhicules industriels (100, 200, 300, 400 ), pour déplacer la charge utile ;
fournir (S5), à l'au moins un véhicule industriel sélectionné, une instruction de déplacer la charge utile.

12. Procédé selon la revendication 11, dans lequel le véhicule industriel comprend :
- une unité de commande (110, 210, 310, 410) pour commander le véhicule industriel ;
un moyen de portage (120, 220, 320, 420) pour porter une charge utile (10, 20, 30) ;
- un moyen de transport (130, 230, 330, 430) pour transporter le véhicule industriel ; et
- une antenne (140, 240, 340, 440) pour recevoir et envoyer des informations ;
dans lequel l'unité de commande est connectée au moyen de portage, au moyen de transport et à l'antenne.

13. Programme d'ordinateur, comprenant des instructions qui, lorsque le programme est exécuté par l'unité de commande, amènent ladite unité de commande à effectuer le procédé selon la revendication 11 ou la revendication 12.

14. Support lisible par ordinateur comprenant des instructions qui, lorsqu'elles sont exécutées par l'unité de commande, amènent ladite unité de commande à effectuer le procédé selon la revendication 11 ou la revendication 12.

15. Système d'optimisation du déplacement d'une charge utile, comprenant une pluralité de véhicules industriels (100, 200, 300, 400) selon l'une quelconque des revendications 1 à 10, dans lequel le système est configuré pour permettre à l'un quelconque de la pluralité de véhicules industriels d'envoyer l'instruction à l'un quelconque de la pluralité de véhicules industriels.

16. Système selon la revendication 15, dans lequel le système est configuré pour établir un schéma de priorité entre la pluralité de véhicules industriels sur la base desdites informations de véhicule de chacun de la pluralité de véhicules industriels.

17. Système selon la revendication 16, dans lequel le système est en outre configuré pour établir le schéma de priorité entre la pluralité de véhicules industriels sur la base du nombre d'éléments d'information de l'unité de commande, de sorte que lorsque deux véhicules industriels ou plus envoient des instructions conflictuelles à un véhicule industriel sélectionné, l'instruction provenant du véhicule industriel ayant un nombre supérieur d'éléments d'informations dans les informations de véhicule et / ou les informations de charge utile est priorisée.

18. Système selon la revendication 16 ou la revendication 17, dans lequel le système est en outre configuré pour établir le schéma de priorité entre la pluralité de véhicules industriels sur la base des capacités de calcul de l'unité de commande de chacun des véhicules industriels.
